(19) Europäisches Patentamt
European Patent Office
Office européen des brevets

(11) **EP 4 503 574 A1**

(12) **EUROPEAN PATENT APPLICATION**
published in accordance with Art. 153(4) EPC

(43) Date of publication:
**05.02.2025 Bulletin 2025/06**

(21) Application number: **23844992.0**

(22) Date of filing: **16.05.2023**

(51) International Patent Classification (IPC):
*H04L 65/613* (2022.01)

(52) Cooperative Patent Classification (CPC):
**H04N 21/2404; H04L 47/263; H04L 47/283;
H04L 47/30; H04N 21/23406; H04N 21/23805**

(86) International application number:
**PCT/CN2023/094411**

(87) International publication number:
**WO 2024/021777 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.07.2022 CN 202210900542**

(71) Applicant: **Tencent Technology (Shenzhen)
Company Limited
Shenzhen, Guangdong 518057 (CN)**

(72) Inventors:
• **CHEN, Huacheng**
  **Shenzhen, Guangdong 518057 (CN)**
• **ZHANG, Hongzhan**
  **Shenzhen, Guangdong 518057 (CN)**
• **QU, Youan**
  **Shenzhen, Guangdong 518057 (CN)**
• **FEI, Wei**
  **Shenzhen, Guangdong 518057 (CN)**
• **LIU, Boxi**
  **Shenzhen, Guangdong 518057 (CN)**

(74) Representative: **EP&C
P.O. Box 3241
2280 GE Rijswijk (NL)**

(54) **DATA TRANSMISSION METHOD, RELATED APPARATUS, DEVICE AND STORAGE MEDIUM**

(57)     The present application discloses a data transmission method for a content delivery network, and a related apparatus, a device and a storage medium, and can be applied to fields including but not limited to live broadcast, Internet of Vehicles, instant messaging, etc. The method of the present application comprises: receiving a first data frame sequence sent by a source device in a first time window; according to the first data frame sequence, determining data jitter information, the data jitter information being used to describe data frame jitter within the time window; according to the data jitter information, setting a first buffer duration threshold for a data buffer; and if the playback duration corresponding to data frames currently contained in the data buffer is greater than or equal to the first buffer duration threshold, then increasing the transmission rate of the data buffer data frames to a target device. The present application effectively avoids large delays in content streams and better-satisfies the requirements of low-latency video service.

Receive a first data frame sequence transmitted by a source device within a first time window, the first data frame sequence including at least two data frames — 210

Determine data jitter information based on the first data frame sequence, the data jitter information being used for describing data frame jitter within a time window — 220

Set a first buffering duration threshold of a data buffer based on the data jitter information — 230

Increase, in a case that a playback duration corresponding to a data frame currently included in the data buffer is greater than or equal to the first buffering duration threshold, a transmission rate of transmitting the data frame of the data buffer to a destination device — 240

FIG. 3

EP 4 503 574 A1

**Description**

RELATED APPLICATION

This application claims priority to Chinese Patent Application No. 2022109005429, filed with China National Intellectual Property Administration on July 28, 2022 and entitled "DATA TRANSMISSION METHOD, RELATED APPARATUS, DEVICE, AND STORAGE MEDIUM", which is incorporated herein by reference in its entirety.

FIELD OF THE TECHNOLOGY

This application relates to the fields of network technologies and communication technologies, and in particular, to data transmission technologies.

BACKGROUND OF THE DISCLOSURE

Streaming media technology is a technology that allows a user to start browsing or playing streaming media without having to wait for all data to be downloaded locally. To cause transmission of the streaming media to be faster and more stable, the streaming media may be delivered from a source node to a service node closest to a user through a content delivery network (CDN), so that the user may obtain required content nearby, so as to increase a response speed of a website to user visits.

During transmission of streaming media, it is difficult to ensure a consistent latency for data packets as a result of a multitude of factors such as a data packet size difference and network routing path selection, which may cause jitter during uplink stream pushing. At present, CDN nodes mainly use a group of pictures (GOP) as a minimum buffer unit to counter uplink jitter.

However, the GOP is used as the minimum buffer unit, which has poor adaptability for an uplink network. If a frame rate during the uplink stream pushing is stable, a fixed buffer is used to increase a latency of a content stream. It may be seen that the currently used jitter buffer solution is difficult to meet a requirement of a low-latency video service.

SUMMARY

Embodiments of the present disclosure provide a data transmission method, a related apparatus, a device, and a storage medium, which can effectively avoid a latency of a content stream and can better meet a requirement of a low-latency video service.

In view of this, an aspect of the present disclosure provides a data transmission method, performed by a computer device, and including:

receiving a first data frame sequence transmitted by a source device within a first time window, the first data frame sequence including at least two data frames;

determining data jitter information based on the first data frame sequence, the data jitter information describing data frame jitter within the first time window;

setting a first buffering duration threshold of a data buffer based on the data jitter information; and

increasing a transmission rate of transmitting a data frame of the data buffer to a destination device in a case that a playback duration corresponding to a data frame currently included in the data buffer is greater than or equal to the first buffering duration threshold.

Another aspect of the present disclosure provides a data transmission apparatus, including:

a receiving module, configured to receive a first data frame sequence transmitted by a source device within a first time window, the first data frame sequence including at least two data frames;

a determination module, configured to determine data jitter information based on the first data frame sequence, the data jitter information describing data frame jitter within the first time window;

the determination module being further configured to set a first buffering duration threshold of a data buffer based on the data jitter information; and

a transmission module, configured to increase a transmission rate of transmitting a data frame of the data buffer to a destination device in a case that a playback duration corresponding to a data frame currently included in the data buffer is greater than or equal to the first buffering duration threshold.

Another aspect of the present disclosure provides a computer device, including a memory and a processor, the memory having a computer program stored therein, and the processor implementing the method in the foregoing aspects when executing the computer program.

Another aspect of the present disclosure provides a computer-readable storage medium, having a computer program stored therein, the computer program, when executed by a processor, implementing the method in the foregoing aspects.

Another aspect of the present disclosure provides a computer program product, including a computer program, the computer program, when executed by a processor, implementing the method in the foregoing aspects.

It may be seen from the foregoing technical solutions that the embodiments of the present disclosure have the following advantages.

An embodiment of the present disclosure provides a data transmission method. A server receives a first data frame sequence transmitted by a source device within a first time window, determines data frame jitter based on the first data frame sequence, and determines a first buffering duration threshold of the data buffer based on the data frame jitter. A transmission rate of transmitting the data frame of the data buffer to a destination device is increased in a case that a playback duration corresponding to a data frame currently included in the data buffer is greater than or equal to the first buffering duration threshold. Through the foregoing manners, more accurate data frame jitter is obtained based on frame-level data. Therefore, the first buffering duration threshold of the data buffer is adaptively adjusted based on the data frame jitter within the time window. In a case that the playback duration of the current buffered data frame is greater than the first buffering duration threshold, the transmission rate of the data frame may be increased. Therefore, a high latency of a content stream is effectively avoided, and a requirement of a low-latency video service is better satisfied.

BRIEF DESCRIPTION OF THE DRAWINGS

FIG. 1 is a schematic diagram of an architecture of a data transmission system according to an embodiment of the present disclosure.

FIG. 2 is a schematic diagram of another architecture of a data transmission system according to an embodiment of the present disclosure.

FIG. 3 is a schematic flowchart of a data transmission method according to an embodiment of the present disclosure.

FIG. 4 is a schematic diagram of a working principle of an adaptive jitter buffer according to an embodiment of the present disclosure.

FIG. 5 is a schematic flowchart of an adaptive jitter buffer according to an embodiment of the present disclosure.

FIG. 6 is a schematic diagram of implementing a jitter buffer based on frame rate jitter according to an embodiment of the present disclosure.

FIG. 7 is another schematic diagram of implementing a jitter buffer based on frame rate jitter according to an embodiment of the present disclosure.

FIG. 8 is a schematic diagram of a probability distribution histogram and a cumulative distribution function (CDF) according to an embodiment of the present disclosure.

FIG. 9 is a schematic diagram of a customized data transmission mode for a live e-commerce streaming scene according to an embodiment of the present disclosure.

FIG. 10 is a schematic diagram of a customized data transmission mode for an on-line education scene according to an embodiment of the present disclosure.

FIG. 11 is a schematic diagram of a customized data transmission mode for a live show streaming scene according to an embodiment of the present disclosure.

FIG. 12 is a schematic diagram of a customized data transmission mode for a live game streaming scene according to an embodiment of the present disclosure.

FIG. 13 is another schematic flowchart of an adaptive jitter buffer according to an embodiment of the present disclosure.

FIG. 14 is another schematic diagram of implementing a jitter buffer based on frame rate jitter according to an embodiment of the present disclosure.

FIG. 15 is another schematic diagram of implementing a jitter buffer based on frame rate jitter according to an embodiment of the present disclosure.

FIG. 16 is another schematic diagram of a customized data transmission mode for a live e-commerce streaming scene according to an embodiment of the present disclosure.

FIG. 17 is another schematic diagram of a customized data transmission mode for an on-line education scene according to an embodiment of the present disclosure.

FIG. 18 is another schematic diagram of a customized data transmission mode for a live show streaming scene according to an embodiment of the present disclosure.

FIG. 19 is another schematic diagram of a customized data transmission mode for a live game streaming scene according to an embodiment of the present disclosure.

FIG. 20 is a schematic diagram of two adjacent time windows according to an embodiment of the present disclosure.

FIG. 21 is another schematic diagram of two adjacent time windows according to an embodiment of the present disclosure.

FIG. 22 is a schematic diagram of a data transmission apparatus according to an embodiment of the present disclosure.

FIG. 23 is a schematic structural diagram of a server according to an embodiment of the present disclosure.

DESCRIPTION OF EMBODIMENTS

At present, a streaming media technology is widely used. A large quantity of on-demand and live streaming services for audio and video, on-line advertisements, and the like use the streaming media technology, which also places great pressure on servers of Internet providers. A content delivery network (CDN) is constructed to deliver streaming media content to an edge node closest to a user, so that the user may "use local materials". An CDN edge node is a node that delivers the content to some farthest-end small-bandwidth networks, mobile networks, broadband networks, or the like to finally serve end users. CDN edge computing is mainly to distribute large-scale resources to the corresponding nodes as efficiently as possible to provide better network experience for end user populations.

If no packet loss, no jitter, and a low latency occurs on a network, every frame of data received may be played directly, and an effect is also very good. However, an actual network condition is more complex, and especially an uplink network has poor adaptability. Therefore, a probability of jitter during uplink stream pushing is also relatively high. Once the network deteriorates, an abnormal condition such as stuttering may occur in the content stream. Based on this, the received data frame needs to be buffered on a server side. The buffering is at the cost of a latency. A larger latency indicates a better effect of dealing with a network jitter. However, an excessive delay may lead to a poor real-time playback of the content stream.

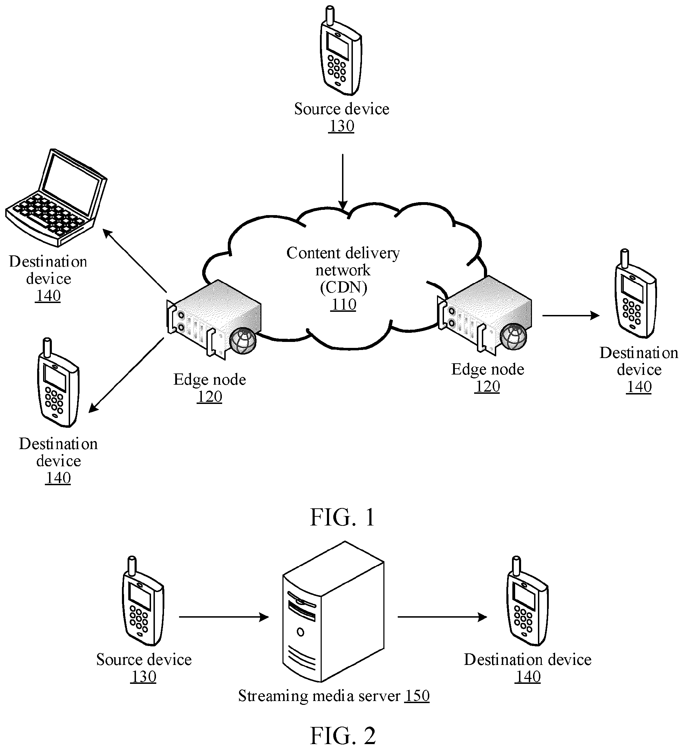

In the present disclosure, a jitter buffer (jitterbuffer) is used on an uplink or a downlink, which may prevent an excessively high latency from being caused by an uplink buffer and take into account timeliness and fluency of playback of the content stream based on a buffer length adjustment method for frame rate jitter. The data transmission method provided in the present disclosure may be applied to a data transmission system shown in FIG. 1 or FIG. 2. As shown in FIG. 1, the data transmission system includes a CDN 110, edge nodes 120, a source device 130, and destination devices 140. The source device 130 pushes a locally collected content stream to the CDN 110, and the CDN 110 delivers the content stream to the edge node 120 closest to the destination device 140. In this way, the destination device 140 may obtain required content nearby. As shown in FIG. 2, the data transmission system includes a streaming media server 150, a source device 130, and a destination device 140. The source device 130 pushes the locally collected content stream to the streaming media server 150, and the destination device 140 pulls the content stream from the streaming media server 150.

Components in the foregoing data transmission system are to be described below.

(1) CDN: Functional entities in the CDN include a content caching device, a content switch, a content router, a CDN content management system, and the like. The content caching device is located at a user access point and is a content providing device for an end user, which may cache static content and streaming media content to implement edge propagation and storage of the content. The content switch is located at a user access concentration point, which may balance loads of a plurality of content caching devices at a single point, and perform cache load balancing and access control on the content. The content router is responsible for scheduling a user request to an appropriate device. The content management system is responsible for management of the entire CDN, and may also perform content management.

(2) Edge node: The edge node is a service platform at the edge of a network close to a user, which is configured to provide a storage resource, a computing resource, a network resource, and the like, and sink some key service applications to an edge of an access network to reduce a width and a delay loss caused by network transmission and multi-level forwarding. The jitter buffer provided in the present disclosure may be deployed on the edge node of the CDN.

(3) Source device: The source device is a terminal used by a stream pushing user. A client is deployed on the terminal. The client may run on the terminal in the form of a browser, or may run on the terminal in the form of an independent application (APP), and a specific presentation form of the client is not limited. The source device may be a mobile phone, a tablet computer, a notebook computer, a palmtop computer, a personal computer, a smart television, a smart watch, an onboard device, a wearable device, and the like.

(4) Destination device: The destination device is a terminal configured to pull a streaming user. A client may also be deployed on the destination device. In addition, the destination device may also be a mobile phone, a tablet computer, a notebook computer, a palmtop computer, a personal computer, a smart television, a smart watch, an onboard device, a wearable device, and the like.

(5) Streaming media server: The streaming media server may be an independent physical server, or may be a server cluster formed by a plurality of physical servers or a distributed system, and may further be a cloud server providing basic cloud computing services such as cloud service, a cloud database, cloud computing, a cloud function, cloud storage, a network service, cloud communication, a middleware service, a domain name service, a security service, and a big data and artificial intelligence platform. The jitter buffer provided in the present disclosure may also be deployed on the streaming media server.

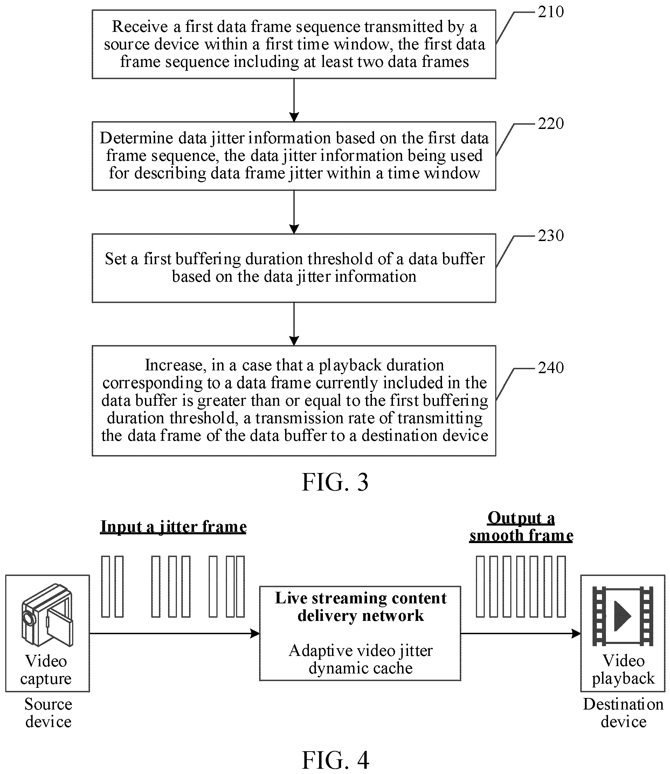

In combination with the foregoing description, the data transmission method in the present disclosure may be described below. Referring to FIG. 3, the data transmission method in this embodiment of the present disclosure may be performed by a computer device. The computer device may be a server or a terminal. The method includes:

210: Receive a first data frame sequence transmitted by a source device within a first time window, the first data frame sequence including at least two data frames.

In one or more embodiments, the source device pushes a content stream to a server (for example, an edge node of a CDN or a streaming media server) through a communication protocol. The content stream is pushed in the form of a data frame. Therefore, the server may collect all data frames within a time window. The first time window is used as an example. The server may obtain the first data frame sequence within the first time window, the first data frame sequence including at least two data frames.

A time window may be set to 5 seconds to 10 seconds or another reasonable duration, which is not limited herein. The communication protocol used by the source device may be a real time messaging protocol (RTMP), a web real-time communication (WebRTC) protocol, secure reliable transport (SRT), or the like, which is not limited herein.

220: Determine data jitter information based on the first data frame sequence, the data jitter information being used for describing data frame jitter within a time window.

In one or more embodiments, the server may deploy a monitoring device that measures a frame rate change in real time. In this way, the monitoring device may generate the data jitter information based on the first data frame sequence collected within the first time window. The data jitter information is used for describing the data frame jitter within the time window. In this embodiment, the data jitter information represents the data frame jitter within the first time window. In another embodiment, the data jitter information may represent the data frame jitter within a second time window (or another time window).

The data frame jitter may refer to a change of a transmission rate of the data frame or a change of a transmission time interval of the data frame. In many cases, the transmission rate of the data frame may change as a result of factors such as a network condition. For example, the transmission rate may change from 30 frames per second (fps) to 10 fps. Alternatively, the transmission time interval of the data frame may change. For example, a transmission time interval between two adjacent data frames is changed from 0.03s to 0.1s. In this embodiment of the present disclosure, the data jitter information is used for describing the change of the transmission rate of the data frame within a specific time window, or the change of the transmission time interval of the data frame.

In an embodiment, it is assumed that a normal playback frame rate is 30 fps, but due to an unstable network condition, the frame rate may be 10 fps, 35 fps, or the like, which may lead to unstable transmission of the data frame. Therefore, the data jitter information needs to be constructed to describe the data frame jitter within a time window.

230: Set a first buffering duration threshold of a data buffer based on the data jitter information.

In one or more embodiments, the first buffering duration threshold corresponding to the data buffer is determined based on the data jitter information. The first buffering duration threshold is a reference duration threshold for determining whether to adjust the transmission rate of the data frame. If it is determined based on the data jitter information that the data frame jitter within the first time window is relatively severe, the first buffering duration threshold corresponding to the data buffer is relatively large. On the contrary, if it is determined based on the data jitter information that the data frame jitter within the first time window is very weak (or even no jitter occurs), the first buffering duration threshold corresponding to the data buffer is relatively small, and even the first buffering duration threshold may be set to 0.

In other words, the first buffering duration threshold of the data buffer needs to be set based on the data frame jitter within the first time window indicated by the data jitter information. The first buffering duration threshold is positively correlated with the data frame jitter indicated by the data jitter information. To be specific, severer data frame jitter indicated by the data jitter information represents a larger first buffering duration threshold. However, more moderate data frame jitter indicated by the data jitter information represents a smaller first buffering duration threshold.

The data buffer in this embodiment of the present disclosure is an intermediate node in the whole data transmission process. In this embodiment of the present disclosure, the source device may transmit the content stream collected by the source device to the streaming media server, and then the destination device obtains, from the streaming media server, data uploaded by the source device. The data buffer in this embodiment of the present disclosure may be deployed on the foregoing streaming media server, and configured to store the data uploaded by the source device as the intermediate node in the whole data transmission process.

240: Increase a transmission rate of transmitting the data frame of the data buffer to the destination device in a case that a playback duration corresponding to a data frame currently included in the data buffer is greater than or equal to the first buffering duration threshold.

In one or more embodiments, the server may obtain, in real time, a quantity of data frames currently stored in the data buffer, and then determine a playback duration corresponding to the data frames currently stored in the data buffer. The playback duration here may be a complete playback duration corresponding to predicted data frames (which have not been transmitted to the destination device) that are currently included in the data buffer. For example, the playback duration corresponding to the data frame currently stored in the data buffer may be calculated at a normal playback frame rate. In an embodiment, assuming that the quantity of data frames currently stored in the data buffer is 60 frames, and the normal playback frame rate is 30 fps, a playback duration of 2 seconds of the data frames may be calculated.

From a temporal dimension, the first time window in step 210 may be located before "current" in step 240, and the first time window is very close to the "current". The first time window in step 210 may alternatively be a time window to which the "current" in step 240 belongs.

This embodiment of the present disclosure is intended to control and adjust the data transmission rate for pushing streams to a destination device (that is, a downlink) based on data jitter during stream pushing by a source device (that is, data jitter of an uplink) to form a closed feedback loop for buffering policies of the CDN and uplink stream pushing conditions. In an embodiment, if uplink data transmission is relatively stable (that is, the data jitter is relatively weak), the data transmission rate of the downlink may be improved, thereby avoiding a data backlog in the data buffer, accelerating delivery of data stored in the data buffer, improving overall data transmission efficiency of the uplink and the downlink, and avoiding a high latency.

In an embodiment, if the playback duration corresponding to the data frames currently included in the data buffer is greater than or equal to the first buffering duration threshold, it indicates that a relatively large quantity of data frames are buffered, and the transmission rate of the data frames needs to be increased. To be specific, the data frame stored in the buffer is transmitted to the destination device at a first transmission rate, and the first transmission rate is greater than an original transmission rate. That the first transmission rate is 1.1 times the original transmission rate is used as an example. It is assumed that the original transmission rate is 30 fps, the first transmission rate may be 33 fps.

In one case, the data frame may be stored directly in the data buffer. In another case, an index of the data frame is stored in the data buffer, and the data frame may be stored in a circular queue. Based on this, the destination device may receive the data frames starting from a most recent I frame or a second most recent I frame in the circular queue. Since common data frames are stored in the circular queue, occupation of memory and processing resources may be reduced. In this embodiment of the present disclosure, the data frames in the foregoing two cases are collectively referred to as data frames included in the data buffer.

For ease of understanding, FIG. 4 is a schematic diagram of a working principle of an adaptive jitter buffer according to an embodiment of the present disclosure. As shown in the figure, a live streaming scene is used as an example. A source device may push a video stream captured in real time to a live streaming CDN, and the live streaming CDN receives inputted video frames. Since an uplink network is unstable, jitter may occur in these video frames. Therefore, the buffering duration threshold may be adaptively adjusted by identifying a change in a frame rate. In this way, smooth data frames are outputted to the destination device at a transmission rate, so that the destination device may stably play the live streaming video.

An embodiment of the present disclosure provides a data transmission method. Through the foregoing manners, more accurate data frame jitter is obtained based on frame-level data. Therefore, the first buffering duration threshold of the data buffer is adaptively adjusted based on the data frame jitter within the time window. In a case that a playback duration corresponding to a current buffered data frame is greater than a first buffering duration threshold, a transmission rate of the data frame may be increased, thereby effectively protecting a content stream from a high latency and better satisfying requirements for low-latency video services. In the meantime, according to the method provided in the present disclosure, uplink packet loss can be reduced by about 20% in laboratory settings.

In some embodiments, based on the embodiments corresponding to FIG. 3 described above, in another alternative embodiment provided in the embodiments of the present disclosure, the data transmission method may further include:

transmitting the data frame of the data buffer to the destination device at an original transmission rate in a case that a playback duration corresponding to the data frame currently included in the data buffer is less than the first buffering duration threshold.

In one or more embodiments, a data transmission method that supports two buffering duration intervals is described. It may be learned from the foregoing embodiments that the server determines, based on a quantity of currently buffered data frames and a normal playback frame rate, the playback duration corresponding to the data frames currently stored in the data buffer. If the playback duration corresponding to the data frame currently stored in the data buffer is less than the first buffering duration threshold, it indicates that the quantity of buffered data frames is reasonable. Therefore, the data frame stored in the buffer is transmitted to the destination device at the original transmission rate.

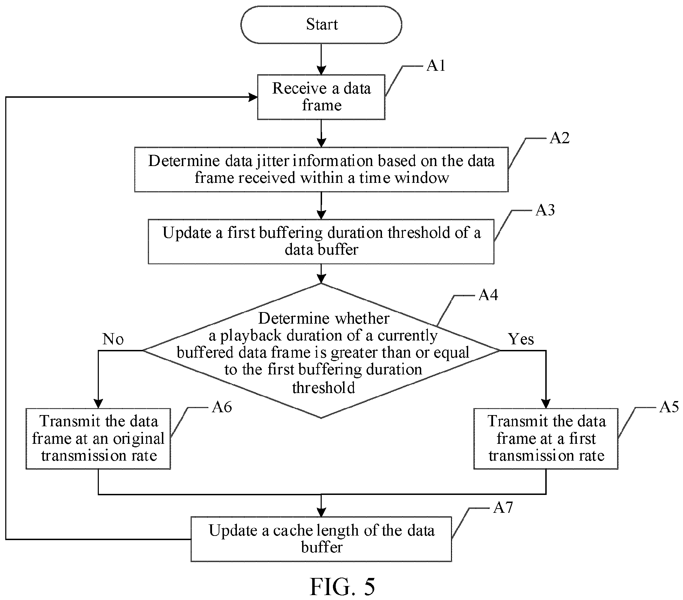

A description is to be given below with reference to the diagram. FIG. 5 is a schematic flowchart of an adaptive jitter buffer according to an embodiment of the present disclosure. As shown in the figure, specific steps are as follows.

Step A1: A server receives a data frame transmitted by a source device.

Step A2: The server determines data jitter information based on the data frame received within a time window.

Step A3: The server updates a first buffering duration threshold of a data buffer based on the data jitter information corresponding to the time window.

Step A4: The server may calculate, based on a quantity of data frames buffered by the data buffer at a current moment, a playback duration of the data frames currently stored in the data buffer. In this way, it is determined whether the playback duration is greater than or equal to the first buffering duration threshold. If so, step A5 is performed, and if not, step A6 is performed.

Step A5: Transmit a smooth data frame to a destination device at a first transmission rate.

Step A6: Transmit the smooth data frame to the destination device at an original transmission rate.

Step A7: Update a cache length of the data buffer based on a transmission condition of the data frame, and update the first buffering duration threshold of the data buffer based on the data frame received at a next time window.

An embodiment of the present disclosure provides a data transmission method that supports two buffering duration intervals. Through the foregoing manner, in a case that a playback duration corresponding to a data frame currently stored in a data buffer is less than a first buffering duration threshold, the data frame is transmitted to a destination device at an original transmission rate. Therefore, corresponding transmission strategies may be adopted for the data frames in different buffering duration intervals, thereby improving flexibility of the solution.

In some embodiments, based on the embodiments corresponding to FIG. 3 described above, in another alternative embodiment provided in the embodiments of the present disclosure, the data jitter information includes a frame rate variance or a frame rate standard deviation.

That the first buffering duration threshold corresponding to the data buffer is determined based on the data jitter information may include:

determining an adjustment coefficient based on a ratio of the frame rate variance to a first preset parameter value, or determining an adjustment coefficient based on a ratio of the frame rate standard deviation to a second preset parameter value; and

determining the first buffering duration threshold corresponding to the data buffer based on a product of the adjustment coefficient and a configuration duration.

In one or more embodiments, a manner of calculating a buffering duration threshold based on the frame rate variance or the frame rate standard deviation is described. It may be learned from the foregoing embodiments that the data jitter information includes the frame rate variance or the frame rate standard deviation. A larger frame rate variance or frame rate standard deviation calculated for a time window represents severer data frame jitter within the time window.

Since the first buffering duration threshold of the data buffer may be adjusted once every time window, for ease of description, one of the time windows (that is, a first time window) is used as an example for description.

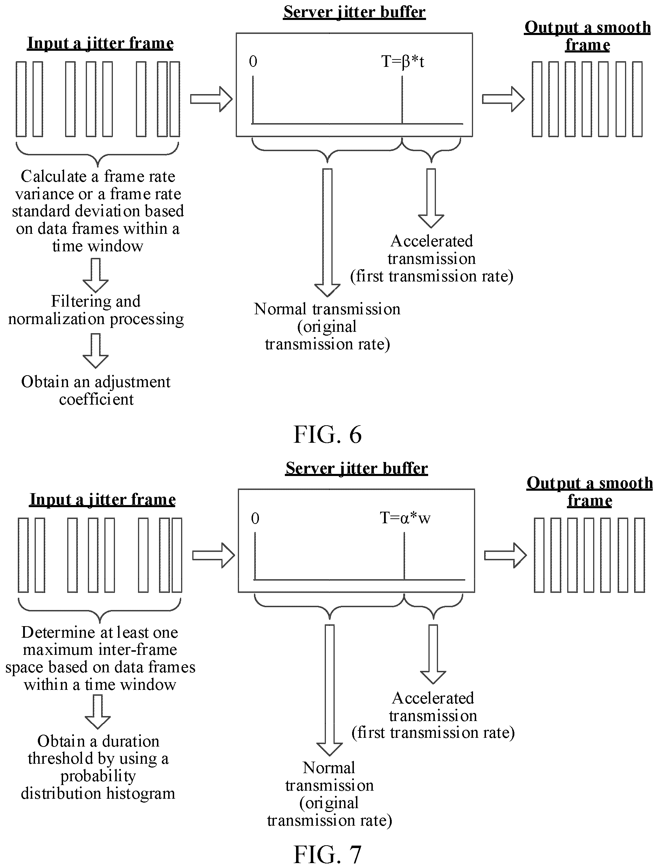

In an embodiment, for ease of understanding, FIG. 6 is a schematic diagram of implementing a jitter buffer based on frame rate jitter according to an embodiment of the present disclosure. As shown in the figure, all data frames within a time window are obtained. For example, a first data frame sequence within a first time window is obtained. It is assumed that a time window is 10 seconds. Based on this, a frame rate per second may be calculated, and then a frame rate variance or a frame rate standard deviation for the time window is calculated based on the frame rate per second. In an embodiment, assuming that a frame rate variance corresponding to a time window is 1.8, and the frame rate variance corresponding to a previous time window thereof is 3.6, the frame rate variance of the time window is reduced by 50% compared with the frame rate variance of the previous time window. Assuming that the frame rate variance of two adjacent time windows is greater than 20%, which indicates that the frame rate variance is noise, then the frame rate variance corresponding to the time window may be eliminated, thereby achieving an effect of filtering.

In a case that the frame rate variance or the frame rate standard deviation does not need to be eliminated, normalization processing still needs to be performed. A manner is determining an adjustment coefficient based on a ratio of the frame rate variance to a first preset parameter value, that is, calculating the adjustment coefficient by using the following formula:

$$\beta = \delta(f)/\delta 1, \text{ Formula (1)}$$

where $\beta$ represents the adjustment coefficient, $\delta(f)$ represents the frame rate variance, and $\delta 1$ represents the first preset parameter value (for example, 2). A smaller first preset parameter value represents a more sensitive adjustment coefficient.

Another manner is determining an adjustment coefficient based on a ratio of the frame rate standard deviation to a second preset parameter value, that is, calculating the adjustment coefficient by using the following formula:

$$\beta = \sigma(f)/\sigma 2, \text{ Formula (2)}$$

where $\beta$ represents the adjustment coefficient, $\sigma(f)$ represents the frame rate standard deviation, and $\sigma 2$ represents the second preset parameter value (for example, 1.2). A smaller second preset parameter value represents a more sensitive adjustment coefficient.

After the adjustment coefficient is calculated, a first buffering duration threshold is calculated by using the following formula:

$$T = \beta * t, \text{ Formula (3)}$$

where T represents the first buffering duration threshold, $\beta$ represents the adjustment coefficient, and t represents a configuration duration (for example, 500 milliseconds).

It may be understood that in a case that an uplink frame rate is stable, priority is given to reducing latency. In this case, the frame rate variance or the frame rate standard deviation is very small. To be specific, the adjustment coefficient is close to 0. Therefore, few data frames are cached in the jitter buffer of the server. In a case that the uplink frame rate is unstable, priority is given to fluency. In this case, the frame rate variance or the frame rate standard deviation is relatively large. To be specific, the adjustment coefficient is positively correlated with the frame rate variance or the frame rate standard deviation. Therefore, the jitter buffer of the server automatically adjusts the first buffering duration threshold and the transmission rate based on a jitter degree, thereby improving adaptability of a CDN in different scenarios.

Next, an embodiment of the present disclosure provides a manner of calculating a buffering duration threshold based on a frame rate variance or a frame rate standard deviation. Through the foregoing manner, the first buffering duration threshold and the transmission rate of the data frame may be automatically adjusted based on the frame rate variance or the frame rate standard deviation, which improves the adaptability of the CDN in different scenarios. In addition, the foregoing manner is relatively simple and convenient in operation, is easy to implement, and has a better real-time processing effect.

In some embodiments, based on the embodiments corresponding to FIG. 3 described above, in another alternative embodiment provided in the embodiments of the present disclosure, the determining data jitter information based on the first data frame sequence may include:

collecting statistics about a frame rate corresponding to each time unit within a first time window based on the first data frame sequence, the first time window including K time units, K being an integer greater than 1;

calculating an average frame rate based on the frame rate corresponding to each time unit; and

calculating the frame rate variance or the frame rate standard deviation based on the frame rate corresponding to each time unit and the average frame rate.

In one or more embodiments, a manner of calculating the frame rate variance or the frame rate standard deviation is described. It may be learned from the foregoing embodiments that the corresponding frame rate variance or frame rate standard deviation may be calculated every time window. The following uses one of the time windows (that is, a first time window) as an example for description.

In an embodiment, it is assumed that a time window is 10 seconds, and a time unit is 1 second. To be specific, the first time window includes 10 time units. Based on this, the frame rate corresponding to each time unit may be calculated based on the first data frame sequence obtained within the first time window. For example, if 20 data frames transmitted by the source device are received within a time unit, a frame rate of the time unit is 20 fps. Therefore, the average frame rate may be obtained by averaging frame rates corresponding to K time units. The frame rate variance or the frame rate standard deviation may be calculated based on the frame rate corresponding to each time unit and the average frame rate.

Based on this, the frame rate variance may be calculated by using the following formula:

$$\delta(f) = \frac{\sum_{i=1}^{K}(x_i - \bar{x})^2}{K}, \text{ Formula (4)}$$

where $\delta(f)$ represents the frame rate variance, K represents a total quantity of time units, $x_i$ represents a frame rate corresponding to an $i^{\text{th}}$ time unit, and $\bar{x}$ represents the average frame rate.

Based on this, the frame rate standard deviation may be calculated by using the following formula:

$$\sigma(f) = \sqrt{\frac{\sum_{i=1}^{K}(x_i - \bar{x})^2}{K}}, \text{ Formula (5)}$$

where $\sigma(f)$ represents the frame rate variance, K represents a total quantity of time units, $x_i$ represents a frame rate corresponding to an $i^{\text{th}}$ time unit, and $\bar{x}$ represents the average frame rate.

Next, in this embodiment of the present disclosure, a manner of calculating a frame rate variance or a frame rate standard deviation is provided. Through the foregoing manner, the frame rate may be calculated by using the collected data frame sequence. Therefore, the frame rate variance or the frame rate standard deviation is further calculated to improve feasibility and operability of the solution.

In some embodiments, based on the embodiments corresponding to FIG. 3 described above, in another alternative embodiment provided in the embodiments of the present disclosure, the data jitter information includes an inter-frame space distribution function. The inter-frame space distribution function is used for describing a relationship between an inter-frame space and a confidence probability.

The setting a first buffering duration threshold corresponding to a data buffer based on the data jitter information may include:

determining a space duration corresponding to a preset confidence probability based on the inter-frame space distribution function; and
determining the first buffering duration threshold of the data buffer based on a product of the space duration and a configuration coefficient.

In one or more embodiments, a manner of calculating a buffering duration threshold based on the inter-frame space distribution function is described. It may be learned from the foregoing embodiments that the data jitter information includes the inter-frame space distribution function. The inter-frame space distribution function is constructed based on the inter-frame space within a time window. The inter-frame space distribution function is used for describing the relationship between the inter-frame space and the confidence probability. Therefore, a larger inter-frame space corresponding to the preset confidence probability (for example, 95%) represents severer data frame jitter within the time window.

It may be understood that the preset confidence probability is usually set to a larger confidence probability, for example, 95%. In some embodiments, the preset confidence probability may be set to another reasonable value, which is not limited herein. The inter-frame space distribution function in the present disclosure may be a cumulative distribution function (CDF), a complementary CDF (CCDF), or the like.

Since the first buffering duration threshold of the data buffer may be adjusted once every time window, for ease of description, one of the time windows (that is, a first time window) is used as an example for description.

In an embodiment, for ease of understanding, FIG. 7 is another schematic diagram of implementing a jitter buffer based on frame rate jitter according to an embodiment of the present disclosure. As shown in the figure, all data frames within a time window are first obtained. For example, a first data frame sequence within a first time window is obtained. A probability distribution histogram is generated based on an inter-frame space between each pair of two adjacent data frames in the first data frame sequence. A probability density function (PDF) about the inter-frame space is drawn based on the probability distribution histogram, and a CDF may be obtained by integrating the PDF. In the present disclosure, the CDF is used as an inter-frame space distribution function. Therefore, a space duration may be calculated by using the following formula:

$$\alpha = \mathrm{F}^{-1}(B\%), \text{ Formula (6)}$$

where $\alpha$ represents the space duration, F represents the inter-frame space distribution function, $\mathrm{F}^{-1}$ represents an inverse function of the inter-frame space distribution function, and $B\%$ represents a preset confidence probability, for example, 95%.

After the space duration is calculated, a first buffering duration threshold is calculated by using the following formula:

$$T = \alpha * w, \text{ Formula (7)}$$

where $T$ represents the first buffering duration threshold, $\alpha$ represents the space duration, and w represents a configuration coefficient (for example, 1.2).

Next, in this embodiment of the present disclosure, a manner of calculating a buffering duration threshold based on an inter-frame space distribution function is provided. Through the foregoing manner, the space duration corresponding to the preset confidence probability (for example, 95%) is derived by using the inter-frame space distribution function. To be specific, a probability of predicting that an interval between next two frames is less than the space duration is 95%. The first buffering duration threshold and a transmission rate of the data frame is automatically adjusted based on the space duration, which improves adaptability of a CDN in different scenarios. In addition, the foregoing manner has a good effect in a practical application.

In some embodiments, based on the embodiments corresponding to FIG. 3 described above, in another alternative embodiment provided in the embodiments of the present disclosure, the determining data jitter information based on the first data frame sequence may include:

collecting statistics about at least one maximum inter-frame space corresponding to each time unit within the first time window based on the first data frame sequence, the first time window including K time units, K being an integer greater than 1;

generating a probability distribution histogram based on the at least one maximum inter-frame space corresponding to each time unit; and

constructing the inter-frame space distribution function based on the probability distribution histogram.

In one or more embodiments, a manner of constructing an inter-frame space distribution function is described. It may be learned from the foregoing embodiments that the corresponding frame rate variance or frame rate standard deviation may be calculated every time window. The following uses one of the time windows (that is, a first time window) as an example for description.

In an embodiment, it is assumed that a time window is 10 seconds, and a time unit is 1 second. To be specific, the first time window includes 10 time units. Moreover, it is assumed that statistics about first two maximum inter-frame spaces corresponding to each time unit are collected. Based on this, Table 1 shows 20 maximum inter-frame spaces taken from the first time window.

Table 1

| Maximum inter-frame space (millisecond) | Maximum inter-frame space (millisecond) |
|---|---|
| 33 | 33 |
| 33 | 33 |
| 34 | 35 |
| 35 | 176 |
| 196 | 211 |
| 213 | 217 |
| 243 | 257 |
| 323 | 325 |
| 346 | 435 |
| 479 | 801 |

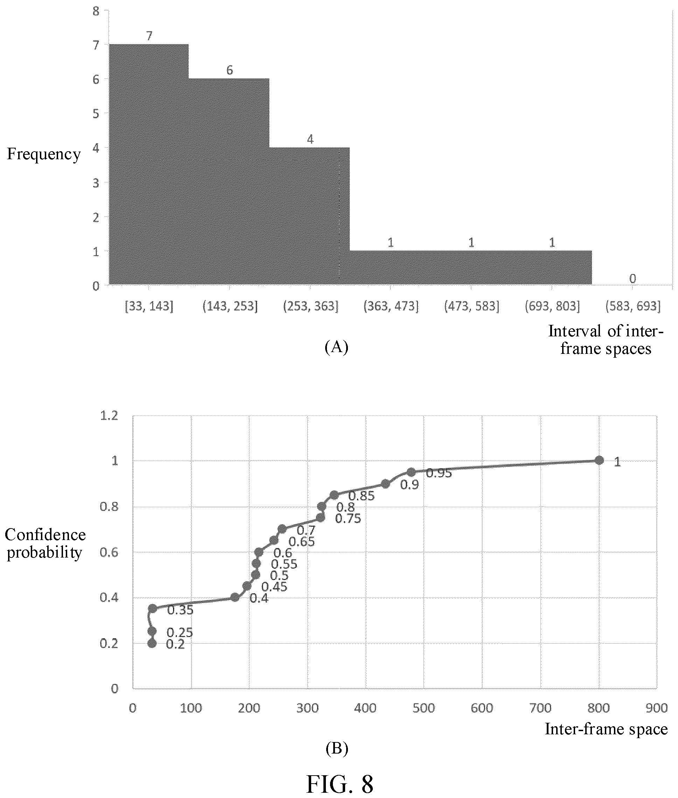

The probability distribution histogram shown in FIG. 8 (A) may be constructed based on the 20 maximum inter-frame spaces shown in Table 1.In an embodiment, if a receiving time of an $i^{th}$ data frame is denoted as $a_i$, and a receiving time of an $(i+1)^{th}$ data frame is denoted as $a_{i+1}$, an inter-frame space between the $i^{th}$ data frame and the $(i+1)^{th}$ data frame is equal to $t_i = a_{i+1} - a_i$. By analogy, the inter-frame space between adjacent data frames within a time window may be obtained. Therefore, the inter-frame space within each time unit may be further screened for at least one maximum inter-frame space.

After the probability distribution histogram shown in FIG. 8 (A) is obtained, the inter-frame space distribution function may be constructed. An example in which the inter-frame space distribution function is the CDF is used. One manner is adding all histograms before a specified point to obtain the CDF shown in FIG. 8 (B). Another manner is drawing a PDF in the probability distribution histogram, and integrating the PDF to obtain the CDF shown in FIG. 8 (B).

Next, an embodiment of the present disclosure provides a manner of constructing an inter-frame space distribution function. Through the foregoing manner, a relationship between an inter-frame space and a confidence probability is reflected based on the inter-frame space distribution function. A space duration corresponding to the confidence probability when being a preset confidence probability (for example, 95%) may be derived based on the inter-frame space distribution function, thereby improving feasibility and operability of the solution.

In some embodiments, based on the embodiments corresponding to FIG. 3 described above, in another alternative embodiment provided in the embodiments of the present disclosure, the data jitter information includes a frame rate variance or a frame rate standard deviation, and the data jitter information includes an inter-frame space distribution function. The inter-frame space distribution function is used for describing a relationship between an inter-frame space and a confidence probability.

The setting a first buffering duration threshold corresponding to a data buffer based on the data jitter information may include:

determining an adjustment coefficient based on a ratio of the frame rate variance to a first preset parameter value, or determining an adjustment coefficient based on a ratio of the frame rate standard deviation to a second preset parameter value; and

determining a first numerical value based on a product of the adjustment coefficient and a configuration duration;

determining a space duration corresponding to a preset confidence probability based on the inter-frame space distribution function; and

determining a second numerical value based on a product of the space duration and a configuration coefficient;

using the first numerical value as the first buffering duration threshold corresponding to the data buffer in a case that the first numerical value is greater than the second numerical value; and

using the second numerical value as the first buffering duration threshold corresponding to the data buffer in a case that the second numerical value is greater than or equal to the first numerical value.

In one or more embodiments, a manner of determining a buffering duration threshold is described. It may be learned from the foregoing embodiment that the data jitter information may include not only the frame rate variance or the frame rate standard deviation, but also the inter-frame space distribution function. Since the first buffering duration threshold of the data buffer may be adjusted once every time window, for ease of description, one of the time windows (that is, a first time window) is used as an example for description.

In an embodiment, the first data frame sequence within the first time window is obtained. In this way, on the one hand, a frame rate per second may be calculated, then the frame rate variance or the frame rate standard deviation for the time window is calculated based on the frame rate per second, then the adjustment coefficient is calculated based on Formula (1) or Formula (2), and finally, the first numerical value is calculated based on Formula (3). The first numerical value represents an alternative first buffering duration threshold. On the other hand, a probability distribution histogram is generated based on an inter-frame space between each pair of two adjacent data frames in the first data frame sequence, and then an inter-frame space distribution function is constructed based on the probability distribution histogram. Then the space duration is calculated based on Formula (6), and finally, the second numerical value is calculated based on Formula (7). The second numerical value represents another alternative first buffering duration threshold.

Based on this, in a case that the first numerical value is greater than the second numerical value, the first numerical value is used as the first buffering duration threshold corresponding to the data buffer. On the contrary, in a case that the second numerical value is greater than or equal to the first numerical value, the second numerical value is used as the first buffering duration threshold corresponding to the data buffer. For the manner of transmitting the data frame based on the first buffering duration threshold, reference may be made to the foregoing embodiment, and details are not described herein again.

Next, an embodiment of the present disclosure provides a manner of determining a buffering duration threshold. Through the foregoing manner, an alternative buffering duration threshold may be calculated based on the frame rate variance or the frame rate standard deviation, and another alternative buffering duration threshold may be calculated based on the inter-frame space distribution function. A larger one of the two alternative buffering duration thresholds is used as the first buffering duration threshold corresponding to the data buffer, so as to better reduce uplink network jitter and help deal with a complex uplink network environment.

In some embodiments, based on the embodiments corresponding to FIG. 3 described above, in another alternative embodiment provided in the embodiments of the present disclosure, the data transmission method may further include:

   receiving a service configuration request transmitted by the source device, the service configuration request carrying a service type identifier; and

   the determining data jitter information based on the first data frame sequence may include:

   determining the data jitter information based on the first data frame sequence and a first configuration parameter set in a case that the service type identifier indicates a real time type service; and

   determining the data jitter information based on the first data frame sequence and a second configuration parameter set in a case that the service type identifier indicates a fluency type service,

   the first configuration parameter set including at least one of the configuration duration and the configuration coefficient, and the second configuration parameter set including at least one of the configuration duration and the configuration coefficient;

   the configuration duration included in the first configuration parameter set being less than the configuration duration included in the second configuration parameter set; and

   the configuration coefficient included in the first configuration parameter set being less than the configuration coefficient included in the second configuration parameter set.

In one or more embodiments, a manner of supporting user-defined data transmission is described. It may be learned from the foregoing embodiment that various types of streaming media exist, for example, live e-commerce streaming, on-line education, live show streaming, live news, network television, radio services, and sports events. Different types of streaming media often have different playback requirements. Generally, in the case of more interaction during live streaming, a lower latency is required. Therefore, it is recommended to use a smaller configuration duration or configuration coefficient. In the case of less interaction during live streaming, higher fluency is required. Therefore, it is recommended to use a larger configuration duration or configuration coefficient.

In an embodiment, three types of live streaming scenes are to be described below with reference to the diagrams.

I. Live e-commerce streaming scene

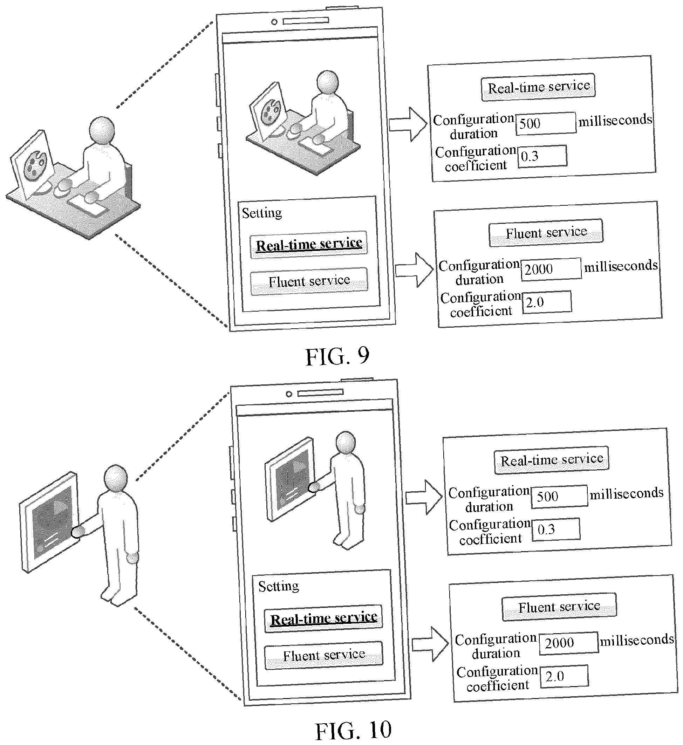

In an embodiment, for ease of understanding, FIG. 9 is a schematic diagram of a customized data transmission mode for a live e-commerce streaming scene according to an embodiment of the present disclosure. As shown in the figure, more interaction usually exists between a live streamer and an audience in the live e-commerce streaming scene. Therefore, the live streamer may trigger a service configuration request by using a source device. FIG. 9 is used as an example. The service configuration request carries a service type identifier corresponding to a "real-time service". Based on this, a server may use a first configuration parameter set based on the service type identifier. The first configuration parameter set includes at least one of a configuration duration and a configuration coefficient. For example, the configuration duration is 500 milliseconds, and the configuration coefficient is 0.3.

II. On-line education scene

In an embodiment, for ease of understanding, FIG. 10 is a schematic diagram of a customized data transmission mode for an on-line education scene according to an embodiment of the present disclosure. As shown in the figure, more interaction usually exists between a live streamer and an audience in the on-line education scene. Therefore, the live streamer may trigger a service configuration request by using a source device. FIG. 10 is used as an example. The service configuration request carries a service type identifier corresponding to a "real-time service". Based on this, a server may use a first configuration parameter set based on the service type identifier.

III. Live show streaming scene

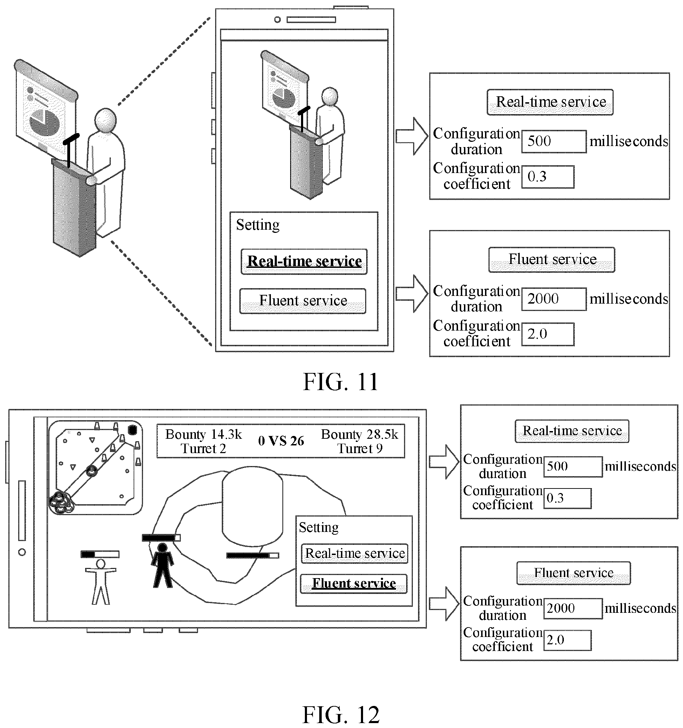

In an embodiment, for ease of understanding, FIG. 11 is a schematic diagram of a customized data transmission mode for a live show streaming scene according to an embodiment of the present disclosure. As shown in the figure, more interaction usually exists between a live streamer and an audience in the live show streaming scene. Therefore, the live streamer may trigger a service configuration request by using a source device. FIG. 11 is used as an example. The service configuration request carries a service type identifier corresponding to a "real-time service". Based on this, a server may use a first configuration parameter set based on the service type identifier.

In the foregoing scene, the server may obtain the data jitter information based on a first data frame sequence and the first configuration parameter set by using the process described in the foregoing embodiment. Details are not described herein.

IV. Live game streaming scene

In an embodiment, for ease of understanding, FIG. 12 is a schematic diagram of a customized data transmission mode for a live game streaming scene according to an embodiment of the present disclosure. As shown in the figure, less interaction usually exists between a live streamer and an audience in the live game streaming scene, and the audience expects to watch clear and fluent game content. Therefore, the live streamer may trigger a service configuration request by using a source device. FIG. 12 is used as an example. The service configuration request carries a service type identifier corresponding to a "fluent service". Based on this, the server may use a second configuration parameter set based on the service type identifier. The second configuration parameter set includes at least one of a configuration duration and a configuration coefficient. For example, the configuration duration is 2000 milliseconds, and the configuration coefficient is 2.0.

In the foregoing scene, the server may obtain the data jitter information based on a first data frame sequence and the second configuration parameter set by using the process described in the foregoing embodiment. Details are not described herein.

Compared with the fluent service, the configuration duration and the configuration coefficient corresponding to a real-time service are smaller. The scenes and related configuration parameters shown in FIG. 9, FIG. 10, FIG. 11, and FIG. 12 are merely for illustration, and are not construed as limitations on the present disclosure.

Next, an embodiment of the present disclosure provides a manner of supporting user-defined data transmission. Through the foregoing manner, the user may adjust the related configuration parameters based on actual requirements of the live streaming scenes, thereby improving flexibility and feasibility of the solution. Meanwhile, the data frame buffer method provided in the present disclosure can support a frame-level adaptive video jitter scene. Therefore, a closed feedback loop is formed for a buffer size and a frame rate for uplink stream pushing or a frame rate for frame receiving, which reduces a video latency while improving video fluency, helps to improve live streaming experience, and finally may increase a gross merchandise volume (GMV), a conversion rate, and a pay user rate of live streaming scenes such as sale of goods through e-commerce platforms.

In some embodiments, based on the embodiments corresponding to FIG. 3 described above, in another alternative embodiment provided in the embodiments of the present disclosure, the determining the first buffering duration threshold corresponding to the data buffer based on the data jitter information may include:

setting the first buffering duration threshold and a second buffering duration threshold of the data buffer based on the data jitter information, the second buffering duration threshold being less than the first buffering duration threshold; and

may further include:
reducing a transmission rate of transmitting the data frame of the data buffer to a destination device in a case that a playback duration corresponding to a data frame currently included in the data buffer is less than or equal to the second buffering duration threshold.

In one or more embodiments, another data transmission method is described. It may be learned from the foregoing embodiment that the server determines the first buffering duration threshold and the second buffering duration threshold corresponding to the data buffer based on the data jitter information, the second buffering duration threshold being less than the first buffering duration threshold.

In an embodiment, the server may obtain, in real time, a quantity of data frames currently stored in the data buffer, and calculate the playback duration corresponding to the data frames currently stored in the data buffer based on a normal playback frame rate. If the playback duration corresponding to the data frame currently stored in the data buffer is less than or equal to the second buffering duration threshold, it indicates that a relatively small quantity of data frames are buffered, and a transmission rate of the data frame needs to be reduced, or a normal transmission rate is maintained. To be specific, the data frame stored in the buffer is transmitted to the destination device at a second transmission rate or an original transmission rate, the second transmission rate being less than the original transmission rate. That the second transmission rate is 0.9 times the original transmission rate is used as an example. It is assumed that the original transmission rate is 30 fps, the second transmission rate may be 27 fps.

Next, an embodiment of the present disclosure provides another data transmission method. Through the foregoing manners, more accurate data frame jitter is obtained based on frame-level data. Therefore, the first buffering duration threshold and the second buffering duration threshold of the data buffer are adaptively adjusted based on the data frame jitter within the time window. In this way, adaptability of the CDN for different uplink networks is improved, and especially a stuttering rate during transmission of a low-latency video is reduced. Large-scale testing demonstrates that when no jitter occurs to uplink transmission quality, an uplink transmission latency is nearly 0, and when jitter occurs to the uplink transmission quality, a buffer length can be automatically optimized to reasonably increase a part of the latency to deal with the uplink jitter, thereby significantly reducing a stuttering rate during video playback.

In some embodiments, based on the embodiments corresponding to FIG. 3 described above, in another alternative embodiment provided in the embodiments of the present disclosure, the data transmission method may further include:
transmitting the data frame of the data buffer to the destination device at the original transmission rate in a case that the playback duration corresponding to the data frame currently included in the data buffer is greater than the second buffering duration threshold and the playback duration corresponding to the data frame currently included in the data buffer is less than the first buffering duration threshold.

In one or more embodiments, a data transmission method that supports three buffering duration intervals is described. It may be learned from the foregoing embodiments that the server determines, based on a quantity of currently buffered data frames and a normal playback frame rate, the playback duration corresponding to the data frames currently stored in the data buffer. The playback duration is denoted as T, the first buffering duration threshold is denoted as T1, and the second buffering duration threshold is denoted as T2. Based on this, if T is greater than or equal to T1, a buffer emptying mode is entered, in which transmission of data frames corresponding to the data buffer to a downlink destination device is accelerated. If T is greater than T2 and T is less than T1, a normal buffer mode is entered, in which transmission of the data frames corresponding to the data buffer to the downlink destination device is normally performed. If T is less than or equal to T2, a buffer accumulation interval is entered, in which transmission of the data frames corresponding to the data buffer to the downlink destination device is decelerated or normally performed. T1 and T2 are proportional to the received frame rate distribution, and may be adjusted adaptively.

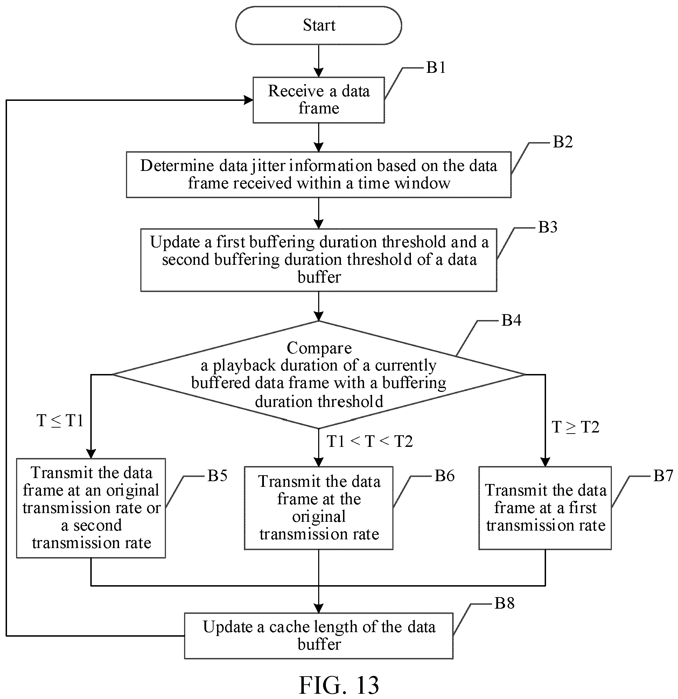

A description is to be given below with reference to the diagram. FIG. 13 is another schematic flowchart of an adaptive jitter buffer according to an embodiment of the present disclosure. As shown in the figure, specific steps are as follows.

Step B1: A server receives a data frame transmitted by a source device.

Step B2: The server determines data jitter information based on the data frame received within a time window.

Step B3: The server updates a first buffering duration threshold and a second buffering duration threshold of a data buffer based on the data jitter information corresponding to the time window.

Step B4: The server may calculate, based on a quantity of data frames buffered by the data buffer at a current moment, a playback duration (that is, T) of the data frames currently stored in the data buffer. Therefore, a magnitude of the playback duration corresponding to the data frame currently stored in the data buffer is compared with a magnitude of the buffering duration threshold.

Step B5: Transmit a smooth data frame to the destination device at the original transmission rate or the second transmission rate if the playback duration of the data frame is less than or equal to the second buffering duration threshold (that is, $T \leq T2$).

Step B6: Transmit the smooth data frame to the destination device at the original transmission rate if the playback duration of the data frame is greater than the second buffering duration threshold and less than the first buffering duration threshold (that is, $T2 < T < T1$).

Step B7: Transmit the smooth data frame to the destination device at a first transmission rate if the playback duration of the data frame is greater than or equal to the first buffering duration threshold (that is, $T \geq T1$).

Step B8: Update a cache length of the data buffer based on a transmission condition of the data frame, and update the first buffering duration threshold and the second buffering duration threshold of the data buffer based on the data frame received at a next time window.

Next, an embodiment of the present disclosure provides a data transmission method that supports three buffering duration intervals. Through the foregoing manner, since the buffering duration interval may be divided into a normal buffer interval, a buffer accumulation interval, and a buffer emptying interval, the playback duration corresponding to the data frame currently stored in the buffer may use different transmission rates within different buffering duration intervals. To be specific, corresponding transmission strategies may be adopted for the data frames in different buffering duration intervals, thereby improving flexibility of the solution.

In some embodiments, based on the embodiments corresponding to FIG. 3 described above, in another alternative embodiment provided in the embodiments of the present disclosure, the data jitter information includes a frame rate variance or a frame rate standard deviation.

The setting a first buffering duration threshold and a second buffering duration threshold corresponding to a data buffer based on the data jitter information may include:

determining an adjustment coefficient based on a ratio of the frame rate variance to a first preset parameter value, or determining an adjustment coefficient based on a ratio of the frame rate standard deviation to a second preset parameter value;

determining the first buffering duration threshold corresponding to the data buffer based on a product of the adjustment coefficient and a first configuration duration; and

determining the second buffering duration threshold corresponding to the data buffer based on a product of the adjustment coefficient and a second configuration duration, the second configuration duration being less than the first configuration duration.

In one or more embodiments, a manner of calculating a buffering duration threshold based on the frame rate variance or the frame rate standard deviation is described. It may be learned from the foregoing embodiments that the data jitter information includes the frame rate variance or the frame rate standard deviation. A larger frame rate variance or frame rate standard deviation calculated for a time window represents severer data frame jitter within the time window.

Since the first buffering duration threshold and the second buffering duration threshold of the data buffer may be adjusted once every time window, for ease of description, one of the time windows (that is, a first time window) is used as an example for description.

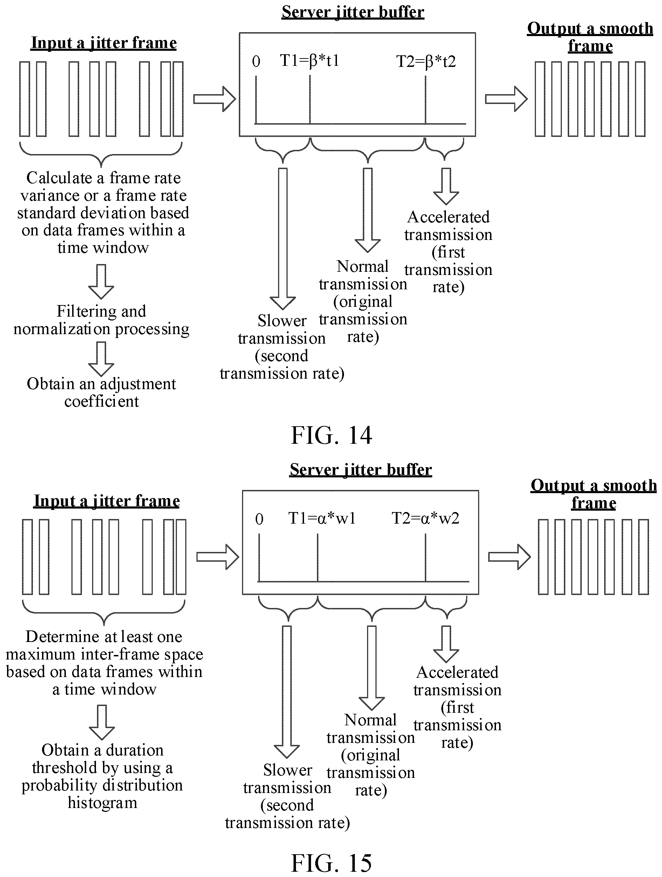

In an embodiment, for ease of understanding, FIG. 14 is another schematic diagram of implementing a jitter buffer based on frame rate jitter according to an embodiment of the present disclosure. As shown in the figure, all data frames within a time window are obtained. For example, a first data frame sequence within a first time window is obtained. Based on this, a frame rate variance or a frame rate standard deviation for a time window is calculated based on Formula (4) or Formula (5). Then filter processing is performed based on the frame rate variance or the frame rate standard deviation. Then for the frame rate variance or the frame rate standard deviation that does not need to be filtered, the adjustment coefficient is calculated based on Formula (1) or Formula (2). For a specific implementation, reference may be made to the foregoing embodiments, and details are not described herein again.

After the adjustment coefficient is calculated, a first buffering duration threshold is calculated by using the

following formula:

$$T2 = \beta * t2, \text{Formula (8)}$$

where T2 represents the first buffering duration threshold, $\beta$ represents the adjustment coefficient, and *t2* represents a first configuration duration (for example, 500 milliseconds).

A second buffering duration threshold is calculated by using the following formula:

$$T1 = \beta * t1, \text{Formula (9)}$$

where *T*1 represents the second buffering duration threshold, $\beta$ represents the adjustment coefficient, and *t*1 represents a second configuration duration (for example, 100 milliseconds).

Next, an embodiment of the present disclosure provides a manner of calculating a buffering duration threshold based on a frame rate variance or a frame rate standard deviation. Through the foregoing manner, the first buffering duration threshold, the second buffering duration threshold, and the transmission rate of the data frame may be automatically adjusted based on the frame rate variance or the frame rate standard deviation, which improves adaptability of a CDN in different scenarios. In addition, the foregoing manner is relatively simple and convenient in operation, is easy to implement, and has a better real-time processing effect.

In some embodiments, based on the embodiments corresponding to FIG. 3 described above, in another alternative embodiment provided in the embodiments of the present disclosure, the data jitter information includes an inter-frame space distribution function. The inter-frame space distribution function is used for describing a relationship between an inter-frame space and a confidence probability.

The determining the first buffering duration threshold and the second buffering duration threshold corresponding to the data buffer based on the data jitter information may include:

determining a space duration corresponding to a preset confidence probability based on the inter-frame space distribution function;
determining the first buffering duration threshold corresponding to the data buffer based on a product of the space duration and a first configuration coefficient; and
determining the second buffering duration threshold corresponding to the data buffer based on a product of the space duration and a second configuration coefficient, the second configuration coefficient being less than the first configuration coefficient.

In one or more embodiments, a manner of calculating a buffering duration threshold based on the inter-frame space distribution function is described. It may be learned from the foregoing embodiments that the data jitter information includes the inter-frame space distribution function. The inter-frame space distribution function is used for describing the relationship between the inter-frame space and the confidence probability. Therefore, a larger inter-frame space corresponding to the preset confidence probability (for example, 95%) represents severer data frame jitter within the time window. It may be understood that the preset confidence probability is usually set to a relatively large confidence probability, for example, 95%. In addition, the inter-frame space distribution function may be a CDF, a CCDF, or the like.

Since the first buffering duration threshold and the second buffering duration threshold of the data buffer may be adjusted once every time window, for ease of description, one of the time windows (that is, a first time window) is used as an example for description.

In an embodiment, for ease of understanding, FIG. 15 is another schematic diagram of implementing a jitter buffer based on frame rate jitter according to an embodiment of the present disclosure. As shown in the figure, all data frames within a time window are first obtained. Then an inter-frame space distribution function is constructed based on an inter-frame space between each pair of two adjacent data frames in a first data frame sequence. Then a space duration is calculated based on Formula (6). For a specific implementation, reference may be made to the foregoing embodiments, and details are not described herein again.

After the space duration is calculated, a first buffering duration threshold is calculated by using the following formula:

$$T2 = \alpha * w2, \text{Formula (10)}$$

where *T*2 represents the first buffering duration threshold, $\alpha$ represents the space duration, and w2 represents a first configuration coefficient (for example, 1.2).

A second buffering duration threshold is calculated by using the following formula:

$$T1 = \alpha * w1, \text{ Formula (11)}$$

where $T1$ represents the second buffering duration threshold, $\alpha$ represents the space duration, and $w1$ represents a second configuration coefficient (for example, 0.2).

Next, an embodiment of the present disclosure provides a manner of calculating a buffering duration threshold based on an inter-frame space distribution function. Through the foregoing manner, the space duration corresponding to the preset confidence probability (for example, 95%) is derived by using the inter-frame space distribution function. To be specific, a probability of predicting that an interval between next two frames is less than the space duration is 95%. The first buffering duration threshold, the second buffering duration threshold, and the transmission rate of the data frame are automatically adjusted based on the space duration, which improves adaptability of a CDN in different scenarios. In addition, the foregoing manner has a good effect in a practical application.

In some embodiments, based on the embodiments corresponding to FIG. 3 described above, in another alternative embodiment provided in the embodiments of the present disclosure, the data jitter information includes a frame rate variance or a frame rate standard deviation, and the data jitter information includes an inter-frame space distribution function. The inter-frame space distribution function is used for describing a relationship between an inter-frame space and a confidence probability.

The determining the first buffering duration threshold and the second buffering duration threshold corresponding to the data buffer based on the data jitter information may include:

determining an adjustment coefficient based on a ratio of the frame rate variance to a first preset parameter value, or determining an adjustment coefficient based on a ratio of the frame rate standard deviation to a second preset parameter value;

determining a first numerical upper limit based on a product of the adjustment coefficient and a first configuration duration;

determining a first numerical lower limit based on a product of the adjustment coefficient and a second configuration duration, the second configuration duration being less than the first configuration duration;

determining a space duration corresponding to a preset confidence probability based on the inter-frame space distribution function;

determining a second numerical upper limit based on a product of the space duration and a first configuration coefficient;

determining a second numerical lower limit based on a product of the space duration and a second configuration coefficient, the second configuration coefficient being less than the first configuration coefficient;

using the first numerical upper limit as the first buffering duration threshold corresponding to the data buffer in a case that the first numerical upper limit is greater than the second numerical upper limit;

using the second numerical upper limit as the first buffering duration threshold corresponding to the data buffer in a case that the second numerical upper limit is greater than or equal to the first numerical upper limit;

using the first numerical lower limit as the second buffering duration threshold corresponding to the data buffer in a case that the first numerical lower limit is greater than the second numerical lower limit; and

using the second numerical lower limit as the second buffering duration threshold corresponding to the data buffer in a case that the second numerical lower limit is greater than or equal to the first numerical lower limit.

In one or more embodiments, a manner of determining a buffering duration threshold is described. It may be learned from the foregoing embodiment that the data jitter information may include not only the frame rate variance or the frame rate standard deviation, but also the inter-frame space distribution function. Since the first buffering duration threshold and the second buffering duration threshold of the data buffer may be adjusted once every time window, for ease of description, one of the time windows (that is, a first time window) is used as an example for description.

In an embodiment, the first data frame sequence within the first time window is obtained. In this way, on the one hand, a frame rate per second may be calculated, then the frame rate variance or the frame rate standard deviation for the time window is calculated based on the frame rate per second, and then the adjustment coefficient is calculated based on Formula (1) or Formula (2). Based on this, the first numerical upper limit is calculated based on Formula (8). The first numerical upper limit represents an alternative first buffering duration threshold. The first numerical lower limit is calculated based on Formula (9). The first numerical lower limit represents an alternative second buffering duration threshold. On the other hand, a probability distribution histogram is generated based on an inter-frame space between each pair of two adjacent data frames in the first data frame sequence, and then an inter-frame space distribution function is constructed based on the probability distribution histogram. Then a space duration is calculated based on Formula (6). The second numerical upper limit is calculated based on Formula (10). The second numerical upper limit represents another alternative first buffering duration threshold. The second numerical lower limit is calculated based on Formula (11). The second numerical lower limit represents another alternative second buffering duration threshold.

In a case that the first numerical upper limit is greater than the second numerical upper limit, the first numerical upper limit is used as the first buffering duration threshold corresponding to the data buffer. On the contrary, in a case that the second numerical upper limit is greater than or equal to the first numerical upper limit, the second numerical upper limit is used as the first buffering duration threshold corresponding to the data buffer.

In a case that the first numerical lower limit is greater than the second numerical lower limit, the first numerical lower limit is used as the second buffering duration threshold corresponding to the data buffer. On the contrary, in a case that the second numerical lower limit is greater than or equal to the first numerical lower limit, the second numerical lower limit is used as the second buffering duration threshold corresponding to the data buffer. For the manner of transmitting the data frame based on the first buffering duration threshold and the second buffering duration threshold, reference may be made to the foregoing embodiment, and details are not described herein again.

Next, an embodiment of the present disclosure provides a manner of determining a buffering duration threshold. Through the foregoing manner, two alternative buffering duration thresholds may be calculated based on the frame rate variance or the frame rate standard deviation, and other two alternative buffering duration thresholds may be calculated based on the inter-frame space distribution function. In this way, the first buffering duration threshold and the second buffering duration threshold are selected from the alternative buffering duration thresholds, so as to better reduce uplink network jitter and help deal with a complex uplink network environment.

In some embodiments, based on the embodiments corresponding to FIG. 3 described above, in another alternative embodiment provided in the embodiments of the present disclosure, the data transmission method may further include:

receiving a service configuration request transmitted by the source device, the service configuration request carrying a service type identifier; and

the determining data jitter information based on the first data frame sequence may include:

determining the data jitter information based on the first data frame sequence and a first configuration parameter set in a case that the service type identifier indicates a real time type service; and

determining the data jitter information based on the first data frame sequence and a second configuration parameter set in a case that the service type identifier indicates a fluency type service,

the first configuration parameter set including at least one of the first configuration duration, the second configuration duration, the first configuration coefficient, and the second configuration coefficient, and the second configuration parameter set including at least one of the first configuration duration, the second configuration duration, the first configuration coefficient, and the second configuration coefficient;

the first configuration duration included in the first configuration parameter set being less than the first configuration duration included in the second configuration parameter set;

the second configuration duration included in the first configuration parameter set being less than the second configuration duration included in the second configuration parameter set;

the first configuration coefficient included in the first configuration parameter set being less than the first configuration coefficient included in the second configuration parameter set; and

the second configuration coefficient included in the first configuration parameter set being less than the second configuration coefficient included in the second configuration parameter set.

In one or more embodiments, a manner of supporting user-defined data transmission is described. It may be learned from the foregoing embodiments that various types of streaming media exist. Different types of streaming media often have different playback requirements. Generally, in the case of more interaction during live streaming, a lower latency is required. In the case of less interaction during live streaming, higher fluency is required.

In an embodiment, three types of live streaming scenes are to be described below with reference to the diagrams.

I. Live e-commerce streaming scene

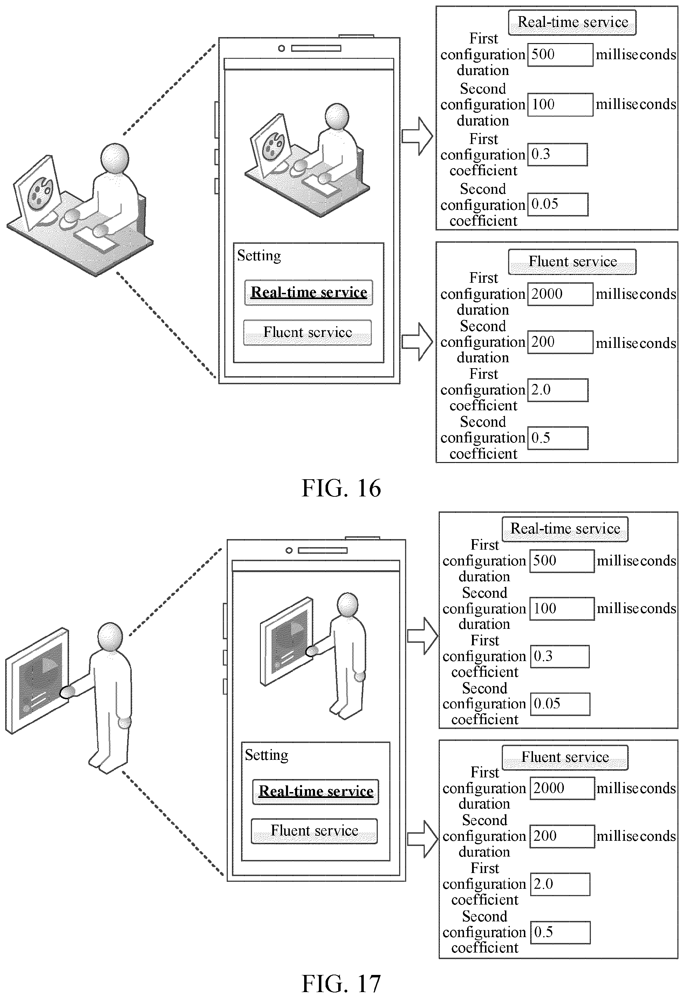

In an embodiment, for ease of understanding, FIG. 16 is another schematic diagram of a customized data transmission mode for a live e-commerce streaming scene according to an embodiment of the present disclosure. As shown in the figure, more interaction usually exists between a live streamer and an audience in the live e-commerce streaming scene. Therefore, the live streamer may trigger a service configuration request by using a source device. FIG. 16 is used as an example. The service configuration request carries a service type identifier corresponding to a "real-time service". Based on this, a server may use a first configuration parameter set based on the service type identifier. The first configuration parameter set includes at least one of a first configuration duration, a second configuration duration, a first configuration coefficient, and a second configuration coefficient. For example, the first configuration duration is 500 milliseconds, the second configuration duration is 100 milliseconds, the first configuration coefficient is 0.3, and the second configuration coefficient is 0.05.

II. On-line education scene

In an embodiment, for ease of understanding, FIG. 17 is another schematic diagram of a customized data transmission mode for an on-line education scene according to an embodiment of the present disclosure. As shown in the figure, more interaction usually exists between a live streamer and an audience in the on-line education scene. Therefore, the live streamer may trigger a service configuration request by using a source device. FIG. 10 is used as an example. The service configuration request carries a service type identifier corresponding to a "real-time service". Based on this, a server may use a first configuration parameter set based on the service type identifier.

III. Live show streaming scene

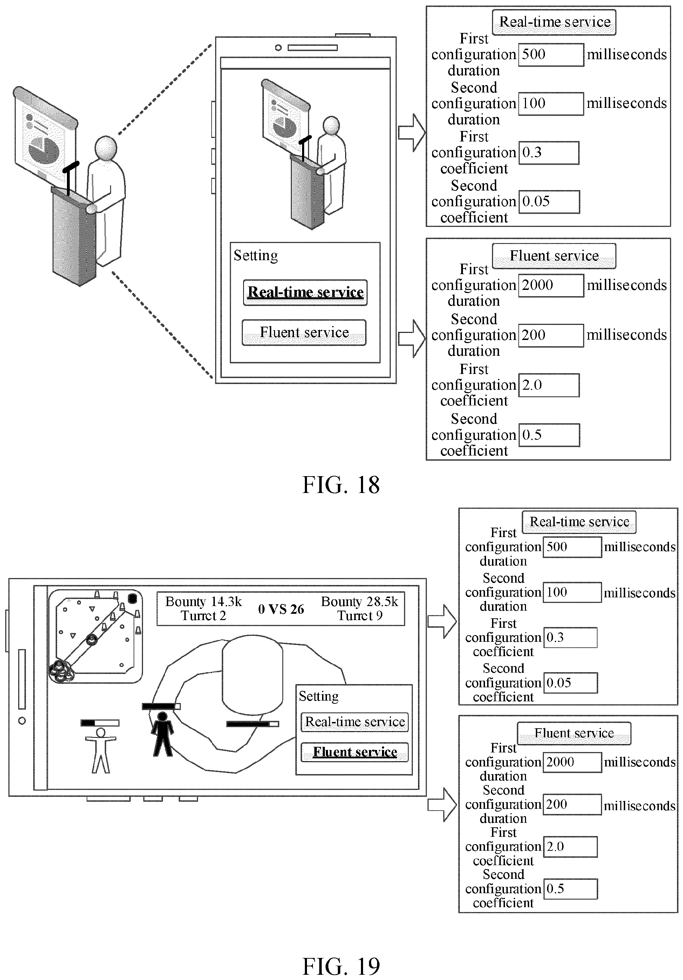

In an embodiment, for ease of understanding, FIG. 18 is another schematic diagram of a customized data transmission mode for a live show streaming scene according to an embodiment of the present disclosure. As shown in the figure, more interaction usually exists between a live streamer and an audience in the live show streaming scene. Therefore, the live streamer may trigger a service configuration request by using a source device. FIG. 11 is used as an example. The service configuration request carries a service type identifier corresponding to a "real-time service". Based on this, a server may use a first configuration parameter set based on the service type identifier.

In the foregoing scene, the server may obtain the data jitter information based on a first data frame sequence and the first configuration parameter set by using the process described in the foregoing embodiment. Details are not described herein.

IV. Live game streaming scene

In an embodiment, for ease of understanding, FIG. 19 is another schematic diagram of a customized data transmission mode for a live game streaming scene according to an embodiment of the present disclosure. As shown in the figure, less interaction usually exists between a live streamer and an audience in the live game streaming scene, and the audience expects to watch clear and fluent game content. Therefore, the live streamer may trigger a service configuration request by using a source device. FIG. 19 is used as an example. The service configuration request carries a service type identifier corresponding to a "fluent service". Based on this, the server may use a second configuration parameter set based on the service type identifier. The second configuration parameter set includes at least one of a first configuration duration, a second configuration duration, a first configuration coefficient, and a second configuration coefficient. For example, the first configuration duration is 2000 milliseconds, the second configuration duration is 200 milliseconds, the first configuration coefficient is 2.0, and the second configuration coefficient is 0.5.

In the foregoing scene, the server may obtain the data jitter information based on a first data frame sequence and the second configuration parameter set by using the process described in the foregoing embodiment. Details are not described herein.

Compared with the fluent service, the configuration duration and the configuration coefficient corresponding to a real-time service are smaller. The scenes and related configuration parameters shown in FIG. 16, FIG. 17, FIG. 18, and FIG. 19 are merely for illustration, and are not construed as limitations on the present disclosure.

Next, an embodiment of the present disclosure provides a manner of supporting user-defined data transmission. Through the foregoing manner, the user may adjust the related configuration parameters based on actual requirements of the live streaming scenes, thereby improving flexibility and feasibility of the solution. Meanwhile, the data frame buffer method provided in the present disclosure can support a frame-level adaptive video jitter scene. Therefore, a closed feedback loop is formed for a buffer size and a frame rate for uplink stream pushing or a frame rate for frame receiving, which reduces a video latency while improving video fluency, helps to improve live streaming experience, and finally may increase a GMV, a conversion rate, and a pay user rate of live streaming scenes such as sale of goods through e-commerce platforms and on-line education.

In some embodiments, based on the embodiments corresponding to FIG. 3 described above, in another alternative embodiment provided in the embodiments of the present disclosure, the receiving a first data frame sequence transmitted by a source device within a first time window may include:

receiving a current data frame transmitted by the source device; and

obtaining the first data frame sequence within the first time window based on the current data frame, the first data frame sequence including the current data frame.

In one or more embodiments, a manner of updating a time window is described. It may be learned from the foregoing embodiment that a buffering duration threshold of a data buffer may be adjusted once every time window. Therefore, the update of the time window reflects an update frequency of the buffering duration threshold.

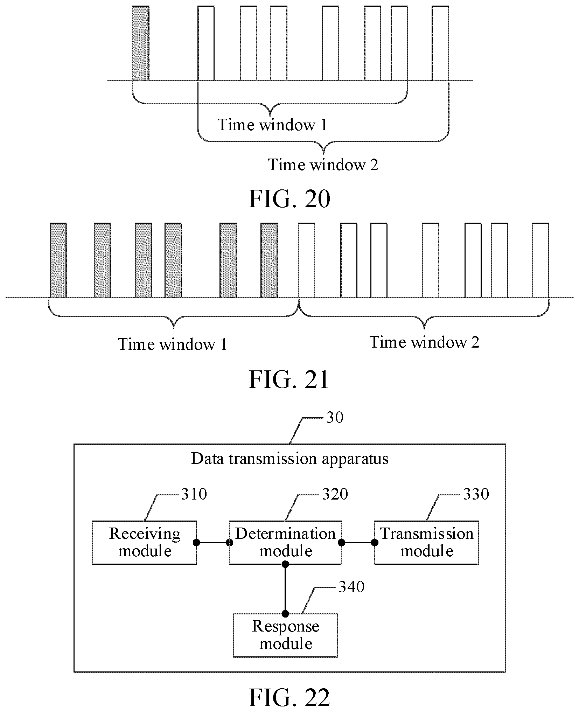

In an embodiment, for ease of understanding, FIG. 20 is a schematic diagram of two adjacent time windows according to an embodiment of the present disclosure. As shown in the figure, it is assumed that a second time window is a "time window 2", and 7 data frames are included within the second time window. The 7 data frames form a second data frame sequence. When a server receives a current data frame transmitted by a source device, the server updates the time window, and obtains a "time window 1". It is assumed that the "time window 1" is a first time window, and 7 data frames are also included within the first time window. The 7 data frames form a first data frame sequence, and the first data frame sequence includes a current data frame (that is, 1 data frame in gray in the figure).

Next, an embodiment of the present disclosure provides a manner of updating the time window. Through the foregoing manner, every time the server receives a data frame transmitted by the source device, the time window may be updated, and then a buffering duration threshold is updated based on the time window. In this way, updating efficiency of the buffering duration threshold is improved, thereby dealing with jitter of an uplink network more desirably.

In some embodiments, based on the embodiments corresponding to FIG. 3 described above, in another alternative embodiment provided in the embodiments of the present disclosure, the receiving a first data frame sequence transmitted by a source device within a first time window may include:

receiving the first data frame sequence transmitted by the source device within the first time window after receiving a second data frame sequence transmitted by the source device within a second time window, the second time window being a previous time window adjacent to the first time window, and a data frame included in the second data frame sequence being not a duplicate of a data frame included in the first data frame sequence.

In one or more embodiments, a manner of updating a time window is described. It may be learned from the foregoing embodiment that a buffering duration threshold of a data buffer may be adjusted once every time window. Therefore, the update of the time window reflects an update frequency of the buffering duration threshold.

In an embodiment, for ease of understanding, FIG. 21 is another schematic diagram of two adjacent time windows according to an embodiment of the present disclosure. As shown in the figure, it is assumed that a second time window is a "time window 2", and 7 data frames are included within the second time window. The 7 data frames form a second data frame sequence. After a server receives the second data frame sequence transmitted by a source device within the second time window, timing for a next time window is started. For example, a time window is set every 10 seconds. Based on this, the server may update the time window once every 10 seconds. An example in which a "time window 1" is obtained is used as an example. The "time window 1" may be a first time window. 6 data frames are included within the first time window (that is, 6 data frames in gray in the figure). The 6 data frames form a first data frame sequence, and the data frames included in the first data frame sequence are not duplicates of the data frames included in the second data frame sequence.

Next, an embodiment of the present disclosure provides a manner of updating the time window. Through the foregoing manner, the server may update the time window at an interval, and then update a buffering duration threshold based on the time window. In this way, the jitter of the uplink network can be periodically dealt with.

A data transmission apparatus in the present disclosure is described in detail below. FIG. 22 is a schematic diagram of an embodiment of a data transmission apparatus according to an embodiment of the present disclosure. A data transmission apparatus 30 includes:

EP 4 503 574 A1

a receiving module 310, configured to receive a first data frame sequence transmitted by a source device within a first time window, the first data frame sequence including at least two data frames;

a determination module 320, configured to determine data jitter information based on the first data frame sequence, the data jitter information being used for describing data frame jitter within a time window;

the determination module 320 being further configured to set a first buffering duration threshold of a data buffer based on the data jitter information; and

a transmission module 330, configured to increase a transmission rate of transmitting the data frame of the data buffer to a destination device in a case that a playback duration corresponding to a data frame currently included in the data buffer is greater than or equal to the first buffering duration threshold.

An embodiment of the present disclosure provides a data transmission apparatus. By using the foregoing apparatus, more accurate data frame jitter is obtained based on frame-level data. Therefore, the first buffering duration threshold of the data buffer is adaptively adjusted based on the data frame jitter within the time window. In a case that the playback duration corresponding to the data frame currently stored in the data buffer is greater than the first buffering duration threshold, a transmission rate of the data frame may be increased, thereby effectively protecting a content stream from a high latency and better satisfying requirements for low-latency video services.

In some embodiments, based on the embodiment corresponding to FIG. 22 described above, in another embodiment of the data transmission apparatus 30 provided in this embodiment of the present disclosure, the transmission module 330 is further configured to transmit the data frame of the data buffer to the destination device at an original transmission rate in a case that the playback duration corresponding to the data frame currently included in the data buffer is less than the first buffering duration threshold.

In some embodiments, based on the embodiment corresponding to FIG. 22 described above, in another embodiment of the data transmission apparatus 30 provided in this embodiment of the present disclosure, the data jitter information includes a frame rate variance or a frame rate standard deviation.

The determination module 320 is further configured to: determine an adjustment coefficient based on a ratio of the frame rate variance to a first preset parameter value, or determine an adjustment coefficient based on a ratio of the frame rate standard deviation to a second preset parameter value; and determine the first buffering duration threshold of the data buffer based on a product of the adjustment coefficient and a configuration duration.

In some embodiments, based on the embodiment corresponding to FIG. 22 described above, in another embodiment of the data transmission apparatus 30 provided in this embodiment of the present disclosure,

the determination module 320 is further configured to: collect statistics about a frame rate corresponding to each time unit within a first time window based on the first data frame sequence, the first time window including K time units, K being an integer greater than 1;

calculate an average frame rate based on the frame rate corresponding to each time unit; and

calculate the frame rate variance or the frame rate standard deviation based on the frame rate corresponding to each time unit and the average frame rate.

In some embodiments, based on the embodiment corresponding to FIG. 22 described above, in another embodiment of the data transmission apparatus 30 provided in this embodiment of the present disclosure, the data jitter information includes an inter-frame space distribution function. The inter-frame space distribution function is used for describing a relationship between an inter-frame space and a confidence probability.

The determination module 320 is further configured to: determine a space duration corresponding to a preset confidence probability based on the inter-frame space distribution function; and determine the first buffering duration threshold of the data buffer based on a product of the space duration and a configuration coefficient.

In some embodiments, based on the embodiment corresponding to FIG. 22 described above, in another embodiment of the data transmission apparatus 30 provided in this embodiment of the present disclosure,

the determination module 320 is further configured to: collect statistics about at least one maximum inter-frame space corresponding to each time unit within the first time window based on the first data frame sequence, the first time window including K time units, K being an integer greater than 1;

21

generate a probability distribution histogram based on the at least one maximum inter-frame space corresponding to each time unit; and

construct the inter-frame space distribution function based on the probability distribution histogram.

In some embodiments, based on the embodiment corresponding to FIG. 22 described above, in another embodiment of the data transmission apparatus 30 provided in this embodiment of the present disclosure, the data jitter information includes a frame rate variance or a frame rate standard deviation, and the data jitter information includes an inter-frame space distribution function. The inter-frame space distribution function is used for describing a relationship between an inter-frame space and a confidence probability.

The determination module 320 is further configured to: determine an adjustment coefficient based on a ratio of the frame rate variance to a first preset parameter value, or determine an adjustment coefficient based on a ratio of the frame rate standard deviation to a second preset parameter value;

determine a first numerical value based on a product of the adjustment coefficient and a configuration duration;

determine a space duration corresponding to a preset confidence probability based on the inter-frame space distribution function;

determine a second numerical value based on a product of the space duration and a configuration coefficient;

use the first numerical value as the first buffering duration threshold of the data buffer in a case that the first numerical value is greater than the second numerical value; and

use the second numerical value as the first buffering duration threshold of the data buffer in a case that the second numerical value is greater than or equal to the first numerical value.

In some embodiments, based on the embodiment corresponding to FIG. 22 described above, in another embodiment of the data transmission apparatus 30 provided in this embodiment of the present disclosure, the data transmission apparatus 30 further includes a response module 340.

The response module 340 is configured to receive a service configuration request transmitted by the source device, the service configuration request carrying a service type identifier.

The determination module 320 is further configured to: determine the data jitter information based on the first data frame sequence and a first configuration parameter set in a case that the service type identifier indicates a real time type service; and

determine the data jitter information based on the first data frame sequence and a second configuration parameter set in a case that the service type identifier indicates a fluency type service,

the first configuration parameter set including at least one of the configuration duration and the configuration coefficient, and the second configuration parameter set including at least one of the configuration duration and the configuration coefficient;

the configuration duration included in the first configuration parameter set being less than the configuration duration included in the second configuration parameter set; and

the configuration coefficient included in the first configuration parameter set being less than the configuration coefficient included in the second configuration parameter set.

In some embodiments, based on the embodiment corresponding to FIG. 22 described above, in another embodiment of the data transmission apparatus 30 provided in this embodiment of the present disclosure, the determination module 320 is further configured to: set the first buffering duration threshold and a second buffering duration threshold of the data buffer based on the data jitter information, the second buffering duration threshold being less than the first buffering duration threshold.

The transmission module 330 is further configured to reduce the transmission rate of transmitting the data frame of the data buffer to the destination device in a case that the playback duration corresponding to the data frame currently included in the data buffer is less than or equal to the second buffering duration threshold.

In some embodiments, based on the embodiment corresponding to FIG. 22 described above, in another embodiment of the data transmission apparatus 30 provided in this embodiment of the present disclosure, the transmission module 330 is further configured to transmit the data frame of the data buffer to the destination device at the original transmission rate in a case that the playback duration corresponding to the data frame currently included in the data buffer is greater than the second buffering duration threshold and the playback duration corresponding to the data frame currently included in the data buffer is less than the first buffering duration threshold.

In some embodiments, based on the embodiment corresponding to FIG. 22 described above, in another embodiment of the data transmission apparatus 30 provided in this embodiment of the present disclosure, the data jitter information includes a frame rate variance or a frame rate standard deviation.

The determination module 320 is further configured to: determine an adjustment coefficient based on a ratio of the frame rate variance to a first preset parameter value, or determine an adjustment coefficient based on a ratio of the frame rate standard deviation to a second preset parameter value;

determine the first buffering duration threshold of the data buffer based on a product of the adjustment coefficient and a first configuration duration; and

determine the second buffering duration threshold of the data buffer based on a product of the adjustment coefficient and a second configuration duration, the second configuration duration being less than the first configuration duration.

In some embodiments, based on the embodiment corresponding to FIG. 22 described above, in another embodiment of the data transmission apparatus 30 provided in this embodiment of the present disclosure, the data jitter information includes an inter-frame space distribution function. The inter-frame space distribution function is used for describing a relationship between an inter-frame space and a confidence probability.

The determination module 320 is further configured to: determine a space duration corresponding to a preset confidence probability based on the inter-frame space distribution function; and

determine the first buffering duration threshold of the data buffer based on a product of the space duration and a first configuration coefficient; and

determine the second buffering duration threshold of the data buffer based on a product of the space duration and a second configuration coefficient, the second configuration coefficient being less than the first configuration coefficient.

In some embodiments, based on the embodiment corresponding to FIG. 22 described above, in another embodiment of the data transmission apparatus 30 provided in this embodiment of the present disclosure, the data jitter information includes a frame rate variance or a frame rate standard deviation, and the data jitter information includes an inter-frame space distribution function. The inter-frame space distribution function is used for describing a relationship between an inter-frame space and a confidence probability.

The determination module 320 is further configured to: determine an adjustment coefficient based on a ratio of the frame rate variance to a first preset parameter value, or determine an adjustment coefficient based on a ratio of the frame rate standard deviation to a second preset parameter value;

determine a first numerical upper limit based on a product of the adjustment coefficient and a first configuration duration;

determine a first numerical lower limit based on a product of the adjustment coefficient and a second configuration duration, the second configuration duration being less than the first configuration duration;

determine a space duration corresponding to a preset confidence probability based on the inter-frame space distribution function;

determine a second numerical upper limit based on a product of the space duration and a first configuration coefficient;

determine a second numerical lower limit based on a product of the space duration and a second configuration coefficient, the second configuration coefficient being less than the first configuration coefficient;

use the first numerical upper limit as the first buffering duration threshold of the data buffer in a case that the first numerical upper limit is greater than the second numerical upper limit;

use the second numerical upper limit as the first buffering duration threshold of the data buffer in a case that the second numerical upper limit is greater than or equal to the first numerical upper limit;

use the first numerical lower limit as the second buffering duration threshold of the data buffer in a case that the first numerical lower limit is greater than the second numerical lower limit; and

use the second numerical lower limit as the second buffering duration threshold of the data buffer in a case that the second numerical lower limit is greater than or equal to the first numerical lower limit.

In some embodiments, based on the embodiment corresponding to FIG. 22 described above, in another embodiment of the data transmission apparatus 30 provided in this embodiment of the present disclosure,
the response module 340 is further configured to receive a service configuration request transmitted by the source device, the service configuration request carrying a service type identifier.

The determination module 320 is further configured to: determine the data jitter information based on the first data frame sequence and a first configuration parameter set in a case that the service type identifier indicates a real time type service; and

determine the data jitter information based on the first data frame sequence and a second configuration parameter set in a case that the service type identifier indicates a fluency type service,

the first configuration parameter set including at least one of the first configuration duration, the second configuration duration, the first configuration coefficient, and the second configuration coefficient, and the second configuration parameter set including at least one of the first configuration duration, the second configuration duration, the first configuration coefficient, and the second configuration coefficient;

the first configuration duration included in the first configuration parameter set being less than the first configuration duration included in the second configuration parameter set;

the second configuration duration included in the first configuration parameter set being less than the second configuration duration included in the second configuration parameter set;

the first configuration coefficient included in the first configuration parameter set being less than the first configuration coefficient included in the second configuration parameter set; and

the second configuration coefficient included in the first configuration parameter set being less than the second configuration coefficient included in the second configuration parameter set.

In some embodiments, based on the embodiment corresponding to FIG. 22 described above, in another embodiment of the data transmission apparatus 30 provided in this embodiment of the present disclosure,

the receiving module 310 is further configured to: receive a current data frame transmitted by the source device; and

obtain the first data frame sequence within the first time window based on the current data frame, the first data frame sequence including the current data frame.

In some embodiments, based on the embodiment corresponding to FIG. 22 described above, in another embodiment of the data transmission apparatus 30 provided in this embodiment of the present disclosure,
the receiving module 310 is further configured to receive the first data frame sequence transmitted by the source device within the first time window after receiving a second data frame sequence transmitted by the source device within a second time window, the second time window being a previous time window adjacent to the first time window, and a data frame included in the second data frame sequence being not a duplicate of a data frame included in the first data frame sequence.

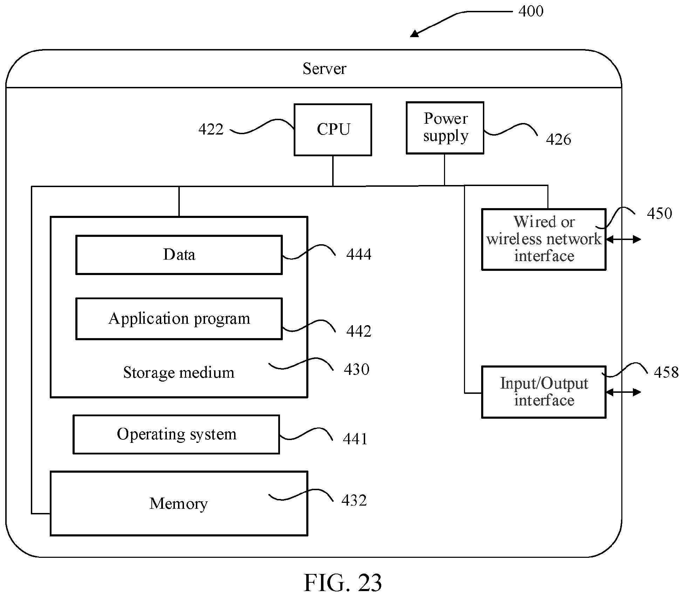

FIG. 23 is a schematic structural diagram of a server according to an embodiment of the present disclosure. The server 400 may vary considerably depending on configuration or performance, and may include one or more central processing units (CPUs) 422 (for example, one or more processors), a memory 432, and one or more storage media 430 (for example, one or more mass storage devices) configured to store an application program 442 or data 444. The memory 432 and the storage medium 430 may provide transitory storage or persistent storage. A program stored in the storage medium 430 may include one or more modules (not marked in the figure), and each module may include a series of instruction operations on the server. Further, the CPU 422 may be configured to communicate with the storage medium 430, and perform the series of instruction operations in the storage medium 430 on the server 400.

The server 400 may further include one or more power supplies 426, one or more wired or wireless network interfaces 450, one or more input/output interfaces 458, and/or one or more operating systems 441 such as Windows Server™, Mac OS X™, Unix™, Linux™, and FreeBSD™.

The steps performed by the server in the foregoing embodiment may be based on the server structure shown in FIG. 23.

An embodiment of the present disclosure further provides a computer device, including a memory and a processor. The memory has a computer program stored therein. The processor implements the steps of the method in the foregoing embodiments when executing the computer program.

An embodiment of the present disclosure further provides a computer-readable storage medium, having a computer program stored therein. The computer program, when executed by a processor, implements the steps of the method in the foregoing embodiments.

An embodiment of the present disclosure further provides a computer program product, including a computer program. The computer program, when executed by a processor, implements the steps of the method in the foregoing embodiments.

It may be clearly understood by a person skilled in the art that, for the purpose of convenient and brief description, for a detailed operating process of the foregoing system, apparatus, and unit, reference may be made to a corresponding process in the foregoing method embodiment. Details are not described herein again.

Based on the above, the foregoing embodiments are merely intended to describe the technical solutions of the present disclosure, and are not intended to limit the present disclosure. Although the present disclosure is described in detail with reference to the foregoing embodiments, it is to be appreciated by a person skilled in the art that the technical solutions described in the foregoing embodiments may still be modified, or some technical features mat be replaced by equivalents. Such modifications or substitutions do not make the essence of the corresponding technical solutions depart from the spirit and scope of the technical solutions of the embodiments of the present disclosure.

**Claims**

1. A data transmission method, executable by a computer device, the method comprising:

   receiving a first data frame sequence transmitted by a source device within a first time window, the first data frame sequence comprising at least two data frames;
   determining data jitter information based on the first data frame sequence, the data jitter information describing data frame jitter within the first time window;
   setting a first buffering duration threshold of a data buffer based on the data jitter information; and
   increasing a transmission rate of transmitting a data frame of the data buffer to a destination device in a case that a playback duration corresponding to a data frame currently comprised in the data buffer is greater than or equal to the first buffering duration threshold.

2. The method according to claim 1, further comprising:

   transmitting the data frame of the data buffer to the destination device at an original transmission rate in a case that the playback duration corresponding to the data frame currently comprised in the data buffer is less than the first buffering duration threshold.

3. The method according to claim 1 or 2, wherein the data jitter information comprises a frame rate variance or a frame rate standard deviation; and
   wherein the setting a first buffering duration threshold of a data buffer based on the data jitter information comprises:

   determining an adjustment coefficient based on a ratio of the frame rate variance to a first preset parameter value, or determining the adjustment coefficient based on a ratio of the frame rate standard deviation to a second preset parameter value; and
   determining the first buffering duration threshold of the data buffer based on a product of the adjustment coefficient and a configuration duration.

4. The method according to claim 3, wherein the determining data jitter information based on the first data frame sequence comprises:

   collecting statistics about a frame rate corresponding to each time unit within the first time window based on the first data frame sequence, the first time window comprising K time units, K being an integer greater than 1;
calculating an average frame rate based on the frame rate corresponding to each time unit; and
calculating the frame rate variance or the frame rate standard deviation based on the frame rate corresponding to each time unit and the average frame rate.

5. The method according to any one of claims 1 to 4, wherein the data jitter information comprises an inter-frame space distribution function, the inter-frame space distribution function describing a relationship between an inter-frame space and a confidence probability; and
wherein the setting a first buffering duration threshold of a data buffer based on the data jitter information comprises:

determining a space duration corresponding to a preset confidence probability based on the inter-frame space distribution function; and
determining the first buffering duration threshold of the data buffer based on a product of the space duration and a configuration coefficient.

6. The method according to claim 5, wherein the determining data jitter information based on the first data frame sequence comprises:

collecting statistics about at least one maximum inter-frame space corresponding to each time unit within the first time window based on the first data frame sequence, the first time window comprising K time units, K being an integer greater than 1;
generating a probability distribution histogram based on the at least one maximum inter-frame space corresponding to each time unit; and
constructing the inter-frame space distribution function based on the probability distribution histogram.

7. The method according to claim 1 or 2, wherein the data jitter information comprises a frame rate variance or a frame rate standard deviation, and comprises an inter-frame space distribution function, the inter-frame space distribution function describing a relationship between an inter-frame space and a confidence probability; and
wherein the setting a first buffering duration threshold of a data buffer based on the data jitter information comprises:

determining an adjustment coefficient based on a ratio of the frame rate variance to a first preset parameter value, or determining the adjustment coefficient based on a ratio of the frame rate standard deviation to a second preset parameter value; and
determining a first numerical value based on a product of the adjustment coefficient and a configuration duration;
determining a space duration corresponding to a preset confidence probability based on the inter-frame space distribution function;
determining a second numerical value based on a product of the space duration and a configuration coefficient;
using the first numerical value as the first buffering duration threshold of the data buffer in a case that the first numerical value is greater than the second numerical value; and
using the second numerical value as the first buffering duration threshold of the data buffer in a case that the second numerical value is greater than or equal to the first numerical value.

8. The method according to any one of claims 1 to 7, further comprising:

receiving a service configuration request transmitted by the source device, the service configuration request carrying a service type identifier; and
wherein the determining data jitter information based on the first data frame sequence comprises:

determining the data jitter information based on the first data frame sequence and a first configuration parameter set in a case that the service type identifier indicates a real time type service; and
determining the data jitter information based on the first data frame sequence and a second configuration parameter set in a case that the service type identifier indicates a fluency type service,
the first configuration parameter set comprising at least one of a configuration duration and a configuration coefficient, and the second configuration parameter set comprising at least one of the configuration duration and the configuration coefficient;
the configuration duration comprised in the first configuration parameter set being less than the configuration duration comprised in the second configuration parameter set; and
the configuration coefficient comprised in the first configuration parameter set being less than the configuration coefficient comprised in the second configuration parameter set.

9.    The method according to any one of claims 1 to 8, wherein the setting a first buffering duration threshold of a data buffer based on the data jitter information comprises:

setting the first buffering duration threshold and a second buffering duration threshold of the data buffer based on the data jitter information, the second buffering duration threshold being less than the first buffering duration threshold; and
the method further comprises:
reducing a transmission rate of transmitting the data frame of the data buffer to the destination device in a case that the playback duration corresponding to a data frame currently comprised in the data buffer is less than or equal to the second buffering duration threshold.

10.    The method according to claim 9, further comprising:
transmitting the data frame of the data buffer to the destination device at an original transmission rate in a case that the playback duration corresponding to the data frame currently comprised in the data buffer is greater than the second buffering duration threshold and the playback duration corresponding to the data frame currently comprised in the data buffer is less than the first buffering duration threshold.

11.    The method according to claim 9 or 10, wherein the data jitter information comprises the frame rate variance or the frame rate standard deviation; and
wherein the setting the first buffering duration threshold and the second buffering duration threshold of the data buffer based on the data jitter information comprises:

determining an adjustment coefficient based on the ratio of the frame rate variance to a first preset parameter value, or determining the adjustment coefficient based on the ratio of the frame rate standard deviation to a second preset parameter value; and
determining the first buffering duration threshold of the data buffer based on a product of the adjustment coefficient and a first configuration duration; and
determining the second buffering duration threshold of the data buffer based on a product of the adjustment coefficient and a second configuration duration, the second configuration duration being less than the first configuration duration.

12.    The method according to claim 9 or 10, wherein the data jitter information comprises an inter-frame space distribution function, the inter-frame space distribution function describing the relationship between an inter-frame space and a confidence probability; and
wherein the setting the first buffering duration threshold and a second buffering duration threshold of the data buffer based on the data jitter information comprises:

determining a space duration corresponding to the preset confidence probability based on the inter-frame space distribution function;
determining the first buffering duration threshold of the data buffer based on a product of the space duration and a first configuration coefficient; and
determining the second buffering duration threshold of the data buffer based on a product of the space duration and a second configuration coefficient, the second configuration coefficient being less than the first configuration coefficient.

13.    The method according to claim 9 or 10, wherein the data jitter information comprises an frame rate variance or the frame rate standard deviation, and also comprises the inter-frame space distribution function, the inter-frame space distribution function describing the relationship between an inter-frame space and a confidence probability; and
wherein the setting the first buffering duration threshold and the second buffering duration threshold of the data buffer based on the data jitter information comprises:

determining an adjustment coefficient based on the ratio of the frame rate variance to a first preset parameter value, or determining the adjustment coefficient based on the ratio of the frame rate standard deviation to a second preset parameter value; and
determining a first numerical upper limit based on a product of the adjustment coefficient and a first configuration duration;

determining a first numerical lower limit based on a product of the adjustment coefficient and a second configuration duration, the second configuration duration being less than the first configuration duration;

determining a space duration corresponding to the preset confidence probability based on the inter-frame space distribution function;

determining a second numerical upper limit based on a product of the space duration and a first configuration coefficient;

determining a second numerical lower limit based on a product of the space duration and a second configuration coefficient, the second configuration coefficient being less than the first configuration coefficient;

using the first numerical upper limit as the first buffering duration threshold of the data buffer in a case that the first numerical upper limit is greater than the second numerical upper limit;

using the second numerical upper limit as the first buffering duration threshold of the data buffer in a case that the second numerical upper limit is greater than or equal to the first numerical upper limit;

using the first numerical lower limit as the second buffering duration threshold of the data buffer in a case that the first numerical lower limit is greater than the second numerical lower limit; and

using the second numerical lower limit as the second buffering duration threshold of the data buffer in a case that the second numerical lower limit is greater than or equal to the first numerical lower limit.

14. The method according to any one of claims 9 to 13, further comprising:

receiving a service configuration request transmitted by the source device, the service configuration request carrying a service type identifier; and

wherein the determining data jitter information based on the first data frame sequence comprises:

determining the data jitter information based on the first data frame sequence and a first configuration parameter set in a case that the service type identifier indicates a real time type service; and

determining the data jitter information based on the first data frame sequence and a second configuration parameter set in a case that the service type identifier indicates a fluency type service,

the first configuration parameter set comprising at least one of a first configuration duration, a second configuration duration, a first configuration coefficient, and a second configuration coefficient, and the second configuration parameter set comprising at least one of the first configuration duration, the second configuration duration, the first configuration coefficient, and the second configuration coefficient;

the first configuration duration comprised in the first configuration parameter set being less than the first configuration duration comprised in the second configuration parameter set;

the second configuration duration comprised in the first configuration parameter set being less than the second configuration duration comprised in the second configuration parameter set;

the first configuration coefficient comprised in the first configuration parameter set being less than the first configuration coefficient comprised in the second configuration parameter set; and

the second configuration coefficient comprised in the first configuration parameter set being less than the second configuration coefficient comprised in the second configuration parameter set.

15. The method according to any one of claims 1 to 14, wherein the receiving a first data frame sequence transmitted by a source device within a first time window comprises:

receiving a current data frame transmitted by the source device; and

obtaining the first data frame sequence within the first time window based on the current data frame, the first data frame sequence comprising the current data frame.

16. The method according to any one of claims 1 to 14, wherein the receiving a first data frame sequence transmitted by a source device within a first time window comprises:

receiving the first data frame sequence transmitted by the source device within the first time window after receiving a second data frame sequence transmitted by the source device within a second time window, the second time window being a previous time window adjacent to the first time window, and a data frame comprised in the second data frame sequence being not a duplicate of a data frame comprised in the first data frame sequence.

17. A data transmission apparatus, comprising:

a receiving module, configured to receive a first data frame sequence transmitted by a source device within a first time window, the first data frame sequence comprising at least two data frames;

a determination module, configured to determine data jitter information based on the first data frame sequence, the data jitter information describing data frame jitter within the first time window;

the determination module being further configured to set a first buffering duration threshold of a data buffer based on the data jitter information; and

a transmission module, configured to increase a transmission rate of transmitting a data frame of the data buffer to a destination device in a case that a playback duration corresponding to a data frame currently comprised in the data buffer is greater than or equal to the first buffering duration threshold.

18. A computer device, comprising a memory and a processor, the memory having a computer program stored therein, the computer program, when executed by the processor, implementing the operations of the method according to any one of claims 1 to 16.

19. A computer-readable storage medium, having a computer program stored therein, the computer program, when executed by a processor, implementing the operations of the method according to any one of claims 1 to 16.

20. A computer program product, comprising a computer program, the computer program, when executed by a processor, implementing the operations of the method according to any one of claims 1 to 16.

Source device
130

Content delivery
network
(CDN)
110

Destination
device
140

Edge node
120

Edge node
120

Destination
device
140

Destination
device
140

Destination
device
140

FIG. 1

Source device
130

Streaming media server 150

Destination device
140

FIG. 2

Receive a first data frame sequence transmitted by a source device within a first time window, the first data frame sequence including at least two data frames ⟋—210

Determine data jitter information based on the first data frame sequence, the data jitter information being used for describing data frame jitter within a time window ⟋—220

Set a first buffering duration threshold of a data buffer based on the data jitter information ⟋—230

Increase, in a case that a playback duration corresponding to a data frame currently included in the data buffer is greater than or equal to the first buffering duration threshold, a transmission rate of transmitting the data frame of the data buffer to a destination device ⟋—240

FIG. 3

**Input a jitter frame**

**Output a smooth frame**

Video capture

**Live streaming content delivery network**

Adaptive video jitter dynamic cache

Video playback

Source device

Destination device

FIG. 4

```
                    ┌─────────────────────┐
                    │        Start        │
                    └─────────────────────┘
                               │
                               ▼           ┌─── A1
                    ┌─────────────────────┐
         ┌─────────▶│   Receive a data    │
         │          │       frame         │
         │          └─────────────────────┘
         │                     │
         │                     ▼                        ┌─── A2
         │          ┌──────────────────────────────────┐
         │          │ Determine data jitter information based on the data │
         │          │   frame received within a time window              │
         │          └──────────────────────────────────┘
         │                     │
         │                     ▼                        ┌─── A3
         │          ┌──────────────────────────────────┐
         │          │ Update a first buffering duration threshold of a   │
         │          │              data buffer                           │
         │          └──────────────────────────────────┘
         │                     │
         │                     ▼          ┌─── A4
         │                  ╱────────────────────╲
         │       No       ╱   Determine whether    ╲      Yes
         │  ◀────────────╱  a playback duration of a  ╲────────────┐
         │              ╲  currently buffered data     ╱            │
         │               ╲ frame is greater than or   ╱             │
         │                ╲ equal to the first       ╱              │
         │                 ╲ buffering duration     ╱               │
         │                  ╲    threshold        ╱                 │
         │                   ╲──────────────────╱                   │
         │          ┌───────────────┐  ┌─ A6        ┌───────────────┐  ┌─ A5
         │          │ Transmit the data │           │ Transmit the data │
         │          │ frame at an original │        │ frame at a first  │
         │          │ transmission rate │           │ transmission rate │
         │          └───────────────┘               └───────────────┘
         │                     │                            │
         │                     ▼                            │
         │          ┌──────────────────────────────────┐  ┌─ A7
         └──────────│ Update a cache length of the data  │
                    │              buffer                │
                    └──────────────────────────────────┘
```

FIG. 5

**Server jitter buffer**

**Input a jitter frame**

**Output a smooth frame**

0             $T=\beta*t$

Calculate a frame rate variance or a frame rate standard deviation based on data frames within a time window

Filtering and normalization processing

Obtain an adjustment coefficient

Accelerated transmission (first transmission rate)

Normal transmission (original transmission rate)

## FIG. 6

**Server jitter buffer**

**Input a jitter frame**

**Output a smooth frame**

0             $T=\alpha*w$

Determine at least one maximum inter-frame space based on data frames within a time window

Obtain a duration threshold by using a probability distribution histogram

Accelerated transmission (first transmission rate)

Normal transmission (original transmission rate)

## FIG. 7

(A)

(B)

FIG. 8

FIG. 9

FIG. 10

FIG. 11

FIG. 12

Start

Receive a data frame —B1

Determine data jitter information based on the data frame received within a time window —B2

Update a first buffering duration threshold and a second buffering duration threshold of a data buffer —B3

Compare a playback duration of a currently buffered data frame with a buffering duration threshold —B4

$T \leq T1$

$T1 < T < T2$

$T \geq T2$

Transmit the data frame at an original transmission rate or a second transmission rate —B5

Transmit the data frame at the original transmission rate —B6

Transmit the data frame at a first transmission rate —B7

Update a cache length of the data buffer —B8

FIG. 13

**Server jitter buffer**

**Input a jitter frame**

**Output a smooth frame**

0    T1=β*t1          T2=β*t2

Calculate a frame rate variance or a frame rate standard deviation based on data frames within a time window

Filtering and normalization processing

Obtain an adjustment coefficient

Slower transmission (second transmission rate)

Normal transmission (original transmission rate)

Accelerated transmission (first transmission rate)

FIG. 14

**Server jitter buffer**

**Input a jitter frame**

**Output a smooth frame**

0    T1=α*w1          T2=α*w2

Determine at least one maximum inter-frame space based on data frames within a time window

Obtain a duration threshold by using a probability distribution histogram

Slower transmission (second transmission rate)

Normal transmission (original transmission rate)

Accelerated transmission (first transmission rate)

FIG. 15

Real-time service

First configuration duration | 500 | milliseconds
Second configuration duration | 100 | milliseconds
First configuration coefficient | 0.3
Second configuration coefficient | 0.05

Setting

**Real-time service**

Fluent service

Fluent service

First configuration duration | 2000 | milliseconds
Second configuration duration | 200 | milliseconds
First configuration coefficient | 2.0
Second configuration coefficient | 0.5

FIG. 16

Real-time service

First configuration duration | 500 | milliseconds
Second configuration duration | 100 | milliseconds
First configuration coefficient | 0.3
Second configuration coefficient | 0.05

Setting

**Real-time service**

Fluent service

Fluent service

First configuration duration | 2000 | milliseconds
Second configuration duration | 200 | milliseconds
First configuration coefficient | 2.0
Second configuration coefficient | 0.5

FIG. 17

FIG. 18

FIG. 19

FIG. 20

FIG. 21

FIG. 22

400

Server

422 ~ CPU

Power supply

426

450

Wired or wireless network interface

Data — 444

Application program — 442

Storage medium — 430

Input/Output interface — 458

Operating system — 441

Memory — 432

FIG. 23

## INTERNATIONAL SEARCH REPORT

| International application No. |
|---|
| **PCT/CN2023/094411** |

**A. CLASSIFICATION OF SUBJECT MATTER**

H04L 65/613(2022.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT; CNKI; WPABS; ENTXT; VEN: 流媒体, 数据, 视频, 抖动, 卡顿, 流畅, 缓冲区, 阈值, 大小, 深度, 速率, 速度, 播放, streaming, data, video, jitter, stuttering, fluency, buffer, threshold, size, depth, rate, speed, playback

**C. DOCUMENTS CONSIDERED TO BE RELEVANT**

| Category* | Citation of document, with indication, where appropriate, of the relevant passages | Relevant to claim No. |
|---|---|---|
| PX | CN 114979091 A (TENCENT TECHNOLOGY (SHENZHEN) CO., LTD.) 30 August 2022 (2022-08-30)<br>claims 1-20 | 1-20 |
| X | CN 107529097 A (BEIJING XINWEI TELECOM TECHNOLOGY INC. et al.) 29 December 2017 (2017-12-29)<br>description, paragraphs [0057]-[0146] | 1-20 |
| X | CN 109168083 A (QINGDAO HISENSE ELECTRIC CO., LTD.) 08 January 2019 (2019-01-08)<br>description, paragraphs [0052]-[0099] | 1-20 |
| X | CN 101110661 A (ZTE CORP.) 23 January 2008 (2008-01-23)<br>description, page 5, line 5-page 9, line 2 | 1-20 |
| X | CN 105554019 A (G-NET CLOUD SERVICE CO., LTD.) 04 May 2016 (2016-05-04)<br>description, paragraphs [0037]-[0088] | 1-20 |
| X | WO 2022019874 A1 (GOOGLE L.L.C.) 27 January 2022 (2022-01-27)<br>description, page 5, line 29-page 12, line 21 | 1-20 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 July 2023** | **24 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/094411** |

| Patent document cited in search report | | | Publication date (day/month/year) | Patent family member(s) | Publication date (day/month/year) |
| --- | --- | --- | --- | --- | --- |
| CN | 114979091 | A | 30 August 2022 | None | |
| CN | 107529097 | A | 29 December 2017 | None | |
| CN | 109168083 | A | 08 January 2019 | None | |
| CN | 101110661 | A | 23 January 2008 | None | |
| CN | 105554019 | A | 04 May 2016 | None | |
| WO | 2022019874 | A1 | 27 January 2022 | None | |

Form PCT/ISA/210 (patent family annex) (July 2022)

**REFERENCES CITED IN THE DESCRIPTION**

**Patent documents cited in the description**

- CN 2022109005429